# EUROPEAN PATENT APPLICATION

(11) **EP 2 589 303 A1**
(43) Date of publication of application: **08.05.2013**
(21) Application number: 10803983.5
(22) Date of filing: 02.07.2010
(51) Int. Cl.: A23L 3/015, A01F 25/14, F26B 5/04, B65D 30/00, B65D 33/00, B65D 33/01, B65D 33/16, B65D 81/00, B65D 81/20

(54) **WATER EQUILIBRIUM VARIABLE PRESSURE DRIED FOODS, PROCESSING METHOD, DEVICE AND PACKAGE THEREOF**

(71) Applicant: Wu, Dinan, Henan 472000 (CN)
(72) Inventor: WU, Yuanming, Henan 472000 (CN)
(74) Representative: Feller, Frank
(86) International application number: PCT/IB2010/053034
(87) International publication number: WO 2011/013016

(57) **Abstract**

A processing method of water equilibrium variable pressure dried foods includes the following steps: filling up the airtight space of the water equilibrium variable pressure drying device with edible foods and water, discharging air from the space when filling water and blocking the foods, collecting liquid water by gravity to form vacuum storage space, thereby obtaining water equilibrium variable pressure dried foods. A water equilibrium variable pressure drying device comprises a space encircled with wall material (1) capable of preventing fluid from passing, sealable inlet and outlet (2), and water outlet (4). A processing method of water equilibrium variable pressure dried foods enables vacuum storage and vacuum package by the water equilibrium variable pressure drying device. A package for water equilibrium variable pressure dried foods is disclosed, wherein the sealing structure of at least one side or one edge of the package is harmonica-type structure.

## Description

### Technical field

The present invention relates to a product obtained by processing and treatment of biomass edible material after harvesting (abbreviated as post-harvest processing), equipment for the processing and treatment process, and a package, and in particular relates to equipment for the treatment process of in-granary drying of biomass material during storage, and a package.

### Background art

Agricultural products, forest products, animal husbandry products, aquatic products and other biomass edible material (as opposed to minerals), such as grains, meat, milk, fruit and vegetables, etc., generally pass through a storage stage after harvesting and before consumption. Before storage, sun-drying or oven-drying is needed to lower the moisture content to a level suitable for storage; only then can the storage stage begin, and during storage, measures must be taken to prevent damage by mice, mould and insects.

These traditional methods either subject the foodstuff raw materials to contamination by pollutants such as benzopyrene and dioxins in the air during sun-drying or oven-drying, or expose the foodstuff raw material to damage as a result of attack by mice, microbes or insects during storage, or lead to biomass edible material spoiling as a result of its own metabolic change, or lower the quality of the foodstuff raw material or jeopardize food safety as a result of new man-made pollution from such measures as pesticide application and fumigation, taken in an attempt to reduce the aforementioned damage.

When harsh weather in the harvest season prevents cereal foodstuff raw materials from being dried in the sun, the result is damage caused by the materials' own metabolic change and mould growth, which is particularly upsetting.

Moreover, the phenomenon of aging of grains during storage and man-made pollution from such measures as pesticide application and fumigation lead to a reduction in the quality of foodstuff raw materials, which has a direct impact on human health.

Although the emergence and use of such techniques as vacuum drying, vacuum storage, vacuum impregnation and vacuum packaging have opened up a route to a solution of the above problems, the high cost of vacuum equipment coupled with high operating costs mean that these technologies cannot be used economically on a broad scale.

Although a vacuum device (CN85109100) was invented early on, it was too simple and was not used for drying operations. Moreover, the materials to be preserved needed baskets and pulleys to be loaded, while rectification measures or techniques in the event of air pressure load leakage were lacking, all of which had a direct impact on the implementation of that invention.

In-granary drying of grain in the prior art is still a technology of drying by ventilation, in which air is the drying medium. The theoretical room for reducing energy consumption when moisture is evaporated by ventilation drying is extremely limited, while the level of drying uniformity is less than satisfactory.

### Disclosure of invention

### Technical problem

People assuredly need a vacuum processing procedure and device with a low construction cost and low operating expenses, in order to reduce damage to foodstuff raw materials during storage and improve the safety and quality thereof.

In particular, there is an urgent need for a method for drying during storage, and a device for realizing the method, when the weather during the crop harvest season is harsh.

The main cause of danger to human health from aflatoxins is human consumption of food contaminated by aflatoxins. General prevention of this type of contamination in the prior art is very difficult, because the presence of fungi in foodstuff raw materials is very common. Forbidding the use of seriously contaminated foodstuff raw materials in the processing of foodstuffs, and the formulation of relevant standards and the monitoring of the implementation thereof, are effective measures, but a simple and effective technical means of controlling the aflatoxin content of foodstuff raw materials to a relatively low and safe level universally is still lacking.

It is even more important that people should be able to universally control the processing and treatment procedure following harvesting of biomass edible material, to produce safe foodstuff raw materials with an extremely low or zero content of pollutants such as aflatoxins, benzopyrene and dioxins, so as to fundamentally reduce the danger to human health from such pollutants as aflatoxins on a universal basis. A vacuum processing procedure and device with a low construction cost and low operating expenses is thus an effective condition for the production of safe foodstuff raw materials with an extremely low or zero content of pollutants such as aflatoxins, benzopyrene and dioxins.

### Technical solution

The present invention provides a water equilibrium variable pressure drying method for the prompt processing of harvested biomass edible material (abbreviated as post-harvest processing). Such a processing method is capable of achieving in an integrated manner the processing results produced by vacuum drying, vacuum storage, vacuum impregnation and vacuum packaging, etc. as required, and also capable of achieving such processing functions as water washing, water separation and water transportation of biomass edible material during the processing procedure.

Biomass edible material that has undergone water equilibrium variable pressure processing is referred to as water-dried food. The water-drying process may be different for different foods; water-dried foods and conventional foods are different in having product features which differ from traditional ones, just as is the case with heat-treated steel and steel that has not undergone heat treatment. Such features will be reflected in different ways depending on the type of food, and it is difficult to describe them using one or several common features. In the embodiments, different products in which water-drying has been used are described in different ways, and it is possible to discern different aspects of the manifestation of product quality. These water-dried foods are not limited to human foods, since the products of livestock, poultry and aquatic organisms reared by humans are also ultimately eaten by humans, and the safety of the feed also has a direct impact on the products. Therefore water-dried food includes not only biomass edible material for human consumption but also biomass edible material used to feed animals.

The effective method by which water equilibrium variable pressure drying equipment can reduce investment in equipment and equipment running costs is based on the fact that the use of a water pump for water filling, water discharge and pressure variation instead of a vacuum pump for air discharge and pressure reduction can greatly reduce the manufacturing and purchase costs of vacuum equipment, while capturing liquefied water molecules using gravity is far more efficient than capturing free air with a vacuum pump and can also lower equipment running costs.

The essential solution of water equilibrium variable pressure drying consists of placing an object of processing in a hermetically sealable container, using a liquid such as water to remove air from the airtight container by pressure, including removing air from within the object of processing by pressurization, and then collecting and discharging liquid water from the bottom of the airtight container using gravity, so that the pressure of the storage space in the airtight container is reduced, with only the object of processing and steam remaining, and a certain degree of vacuum being maintained. The pressure inside the airtight container can be controlled artificially to vary within the interval X106 - X103 Pa.

The core of the present invention is the isolation of the object of processing from the atmosphere, to achieve two main processing functions, namely vacuum storage and vacuum drying, while also achieving such processing functions as water washing, water separation, water transportation, vacuum impregnation and vacuum packaging.

Water equilibrium variable pressure drying is in fact a completely new processing method, referred to as water-drying for short. In accordance with the counterposed unified laws that "from extreme *yin* arises *yang,* from extreme *yang* arises *yin",* an economical drying and storage method and equipment are provided for that most widespread and common of objects to be dried and processed - grain.

Water-drying exploits the properties of water to achieve the removal of water using water, and differs not only from methods of drying in the atmosphere such as sun-drying, airing, wind-drying, oven-drying and freeze-drying, but also from vacuum drying in the prior art, in which air is extracted to create negative pressure.

The water equilibrium variable pressure drying method is an "in-granary drying" method, which can be conducted in an airtight container sealed from the atmosphere in the area to which "granary" refers. The storage space in the container holds the object of processing, and water is used to remove and isolate air in the voids of the object of processing and air in the space not occupied by the object of processing in the airtight container. After sealing the container, gravity is used to collect liquid water and discharge it to the outside of the airtight container, so that a vacuum environment is formed and maintained in the space in the container in which the object of processing is placed.

Drying of the object of processing by the water equilibrium variable pressure drying method requires space, while storage after drying also requires space; the purpose of drying is to guarantee storage, while the purpose of storage is to extend the usage period. The space and time needed for drying and storage are combined as one, i.e. drying and storage are achieved at the same place and time. The organic unification of drying and storage can achieve storage of the object of processing in a hermetically sealable container and drying of the product using water equilibrium variable pressure drying, while also solving other technical problems faced in conventional drying and improving the storage level, and exploiting the advantages of "in-granary drying" in reducing turning during transportation and lowering costs.

Water equilibrium variable pressure drying and vacuum drying have the following feature in common: the pressure which evaporates moisture from within the material to be dried is the same. In other words, they exploit the physical property that a reduction in air pressure can make water molecules more active so that they change into steam.

However, water equilibrium variable pressure drying is different from vacuum drying by extraction of air in substance. Firstly, at the same negative pressure, the amount of oxygen with which the object of processing comes into contact during drying is much less than in the case of vacuum drying by air extraction. Secondly, vacuum drying by air extraction uses either heating or freezing to accelerate the drying process, so as to improve the operating efficiency of the equipment; the moisture discharged during drying is discharged from the equipment in the form of steam, and the thermal energy it carries away is far greater than in the case of water equilibrium variable pressure drying. Thirdly, the drying medium in vacuum drying is residual air or charged steam, whereas in the water equilibrium variable pressure drying process, a medium which conducts drying heat by convection replaces the evaporated saturated steam. This medium has a much higher specific heat than air and is far more efficient at conducting heat, which is favourable for using natural energy from nature, such as the temperature difference between night and day, as a source of energy for achieving drying. Fourthly, drying in large batches is difficult with vacuum drying by air extraction, whereas drying can be conducted in batches of tens of thousands of tons with water equilibrium variable pressure drying, which can also ensure uniformity of drying level in objects to be processed in the same batch.

Water equilibrium variable pressure drying is different from conventional sun-drying, airing, wind-drying and oven drying in that it can guarantee the uniformity of drying. In drying by sun or air, etc., it is necessary to use human labour or machinery to turn the material being dried, in order to try to achieve uniformity. Even so, it is not possible to ensure that the uniformity of drying reaches an ideal level. Taking grain as an example, uniformity of the water content of grains cannot be guaranteed, and even if only a very small number of grains have gone mouldy as a result of insufficient drying, this is enough to affect the quality of the whole batch of grain, and so it is necessary to use photoelectric equipment, for example, to select and remove grains that have changed colour as a result of mould, in order to reduce the impact on the quality of the batch of grain as a whole. Uniformity does not just involve differences in water content from grain to grain; another aspect of uniformity is differences in water content between the outside and inside of the same grain. Taking paddy as an example, once such non-uniformity reaches a certain level, the phenomenon of paddy cracking will occur; the cracking rate in paddy that has been dried in the sun, air, wind or an oven has remained at over 5%, whereas water-drying can eliminate the presence of such non-uniformity.

The ability of water equilibrium variable pressure drying to increase the level of drying uniformity is beyond question, and the uniformity of drying in large batches in particular can be reliably guaranteed.

Water equilibrium variable pressure drying can mitigate the phenomena of drying shrinkage and dry hardness. The mechanism by which drying shrinkage occurs in conventional drying is as follows. When material to be dried is drying under atmospheric pressure, the gradual departure of internal moisture leads to gradual collapse of the microscopic structure; the main cause of this structural collapse is the pressure applied to the structure by atmospheric pressure. Under conditions of negative pressure, this collapse decreases owing to the reduction in absolute pressure; once the internal moisture has gradually fallen to a certain level, even if the negative pressure is eliminated, a sudden increase in pressure will cause air to fill the structure originally supported by moisture. From a macroscopic point of view, there is a reduction in the drying shrinkage occurring during drying, which makes the dried product more porous, reducing the dry hardness caused by drying shrinkage when material is dried under atmospheric pressure. The hardness of the dried product is reduced overall, which is favourable for reprocessing of the dried product. The phenomenon of dry hardness in oven drying is drying shrinkage and hardening caused by an increase in internal stress as a result of the speed of this collapse of the microscopic structure being too high, and this causes a change in the taste of the food.

The mechanism by which the object of processing is isolated from the atmosphere, to achieve the two main processing functions of vacuum storage and vacuum drying, in water equilibrium variable pressure drying is as follows. Under vacuum conditions, there is a water liquid surface beneath the storage space for absorbing water formed by condensation of steam in the storage space. The moisture contained in the object of processing evaporates continuously, and condenses with water evaporating from the water surface continuously, collecting at the water liquid surface at the bottom of the airtight container, while the water liquid surface is kept at a certain height by water pumping and water discharge to maintain the degree of vacuum in the storage space. Within the airtight container, the evaporation and condensation of steam are in instantaneous dynamic equilibrium at a specific pressure and temperature. Temperature difference variation between night and day outside the storage space means that the low-temperature cold trap effect formed in the storage space may also cause variation in the degree of vacuum in the storage space. The different dynamic equilibriums at each instantaneous point in time cause the moisture contained in the object of processing to continuously evaporate and move outward, liquefying and collecting at the water liquid surface at the bottom of the airtight container. Thus gradual drying of the object of processing is achieved during the storage process, while the processed object is not exposed to the atmosphere and so is protected from attack by mice, insects and microbes; moreover, the metabolic effect of the processed object itself is inhibited.

The meaning of the name "water equilibrium variable pressure drying" is as follows.

The objective of drying is the removal of water, and the removal of water using water is a peculiarity of the present invention in achieving the drying function. Therefore the "water" feature has been specially used in naming this drying function.

Equilibrium is a feature of water; at a specific pressure and temperature, the evaporation and liquefaction of water can attain equilibrium due to the incessant movement of molecules. This drying process is an equilibrium process in which water undergoes evaporation and liquefaction under conditions of negative pressure, a water removal process in which moisture in the material to be dried is evaporated and liquefied in a liquid surface. This process contains only an equilibrium process of thermal energy transfer; the equilibrium in such a process is an objective fact, an equilibrium process in a specific space. This is different from drying in the prior art, in which moisture is discharged into the atmosphere as steam, carrying away energy. The "equilibrium" feature has been specially used in naming this kind of drying.

Pressure variation has an important function in such a drying process. One of the important features of such drying is the creation of negative pressure by overcoming atmospheric pressure, while the creation of negative pressure in such drying relies upon the gravity of water; since the water filling process creates water pressure, which is added to the atmospheric pressure at the water surface, the result is that the pressure on the material to be dried is higher than atmospheric pressure. This is different from the pure negative pressure in vacuum drying. The discharge of water after water filling is a process in which the pressure changes considerably, so pressure variation is an objective feature at the start of such a drying process, while the intensity of drying after the drying process has started is also related to fluctuation in negative pressure caused by temperature variation. The feature of "variable pressure" of water has been specially used in naming this kind of drying.

"Water", "equilibrium" and "variable pressure" are important features of the process of achieving drying by such drying, and the use of these features in naming to highlight the differences between this drying method and other drying methods is scientific and objective. It is not easily confused with other drying methods, and in view of the fact that new drying methods will constantly emerge with the progress of science, it is necessary that this drying method be named correctly.

It is easy to see that water equilibrium variable pressure drying requires equipment in order to be carried out. This equipment is referred to as water-drying equipment for short, and should at least include one hermetically sealable space, or a set of hermetically sealable spaces, that can accommodate the material to be dried and the drying medium of water, and be isolated from the atmosphere.

The vacuum device (CN85109100) in the background art has some of the features of such equipment; although it has preservation and storage functions, it is conspicuously lacking in the fundamental properties needed for use as drying equipment. However, its ability to overcome atmospheric pressure using the gravity of water is a structural feature that is very desirable, and can be developed and enhanced.

Water equilibrium variable pressure drying equipment is referred to as water-drying equipment for short.

Water equilibrium variable pressure drying equipment is a requirement for the realization of the water-drying method. The water-drying method must rely upon the water-drying equipment, and the function of the water-drying equipment directly determines whether the water-drying process can be carried out, and whether the various advantages of the water-drying method can be exploited and embodied. Therefore the water-drying equipment included in the present invention should also be fully disclosed.

Although the water-drying equipment disclosed in the present invention cannot eliminate the possibility of the water equilibrium variable pressure drying method being realized using other forms of equipment, the water-drying equipment disclosed in the present invention is fully capable of meeting most of the demands of production in society with respect to the realization of the water equilibrium drying method, especially the demand for drying and storage of grain.

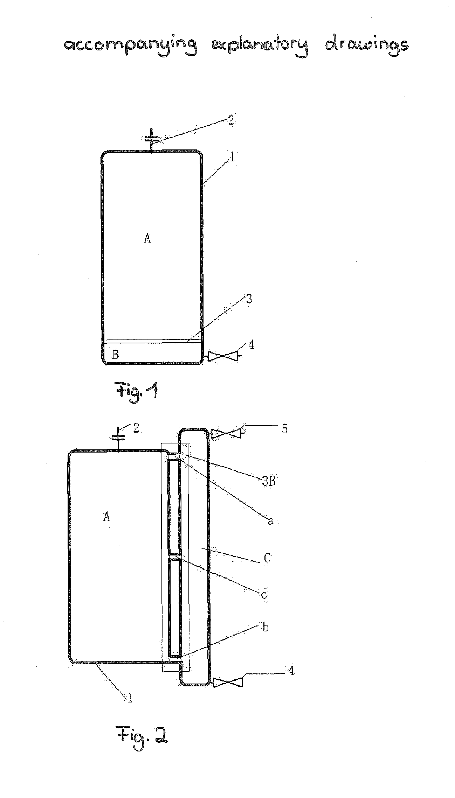

Fig. 1 is a schematic diagram of a simple water-drying device; this simple water-drying device is in fact a container capable of being hermetically sealed and isolated from the atmosphere, and the material 1 of the inner and outer walls which form the container should meet the basic requirements for preventing ingress and egress of fluids. An inlet/outlet 2 for material to enter and exit is provided on the container; of course, this inlet/outlet 2 also allows the drying medium of water to enter and exit, and air to enter and exit when hermetic sealing has not taken place. Inside the container is a device which prevents the material to be dried from flowing but does not prevent flow, represented by a filter plate 3 in this schematic diagram. Above the filter plate is an accommodating space A for storing the material to be dried; below the filter plate is a holding space B for liquid water. There is no restriction on the ratio in which the two spaces, A and B, can occupy space inside the container.

A can be as large as possible, while B can be as small as possible to increase the utilization rate of the device space.

The main purpose of the division into regions A and B is to show that the material in region A cannot be immersed in water during the drying process or after becoming a dried product. There is a water discharge port 4 at the bottom of the container; this water discharge port 4 is controlled by a one-way valve and a cut-off valve to satisfy the function thereof.

The simple water-drying device illustrated in Fig. 1 has the following operating procedure:
(1) The inlet/outlet is opened and material to be dried, such as paddy or other plant seed material, is introduced into cavity A.
(2) The drying medium of water is poured in, to fill space B and the voids in the material to be dried and the space not occupied by material in space A, so that the air in spaces A and B is completely or almost completely displaced by water; at this time, the water discharge port 4 exhibits a closed state under the action of the cut-off valve, since the spaces A and B could never be filled otherwise.
(3) The inlet/outlet 2 is closed and sealed, so that it has the function of sealing to prevent the passage of fluid.
(4) The cut-off valve on the water discharge port 4 is opened, and water from spaces A and B in the container is discharged to the outside under the action of gravity; when the water level falls below the position of the filter plate 3, space A in the container forms a crude vacuum, and the process of drying the material to be dried by water equilibrium variable pressure drying begins.
(5) After a period of time, when the moisture content of the material to be dried has dropped to the required standard, the airtight inlet/outlet 2 is opened and air enters; water in space B is also discharged from water discharge port 4 under the action of air pressure, and the drying process ends.
(6) The finished dried product can be removed at this point. It is also possible to dispense with removal and use the device as a storage device for storing the finished dried product. In fact, the introduction of the material to be dried before the end of the drying process can also be regarded as the beginning of storage, with the storage after drying has ended being no more than a continuation of storage.

The above six steps briefly relate the operating procedure for completing water equilibrium variable pressure drying and storage using a simple water-drying device. Step 4 must be supplemented; the discharge of water from the water discharge port and the formation of a vacuum environment in space A under the action of the gravity of water is an important link in determining the realization of water-drying. When the height of space B is greater than 10.34 metres, the resistance arising from atmospheric pressure at the water discharge port can be overcome by relying solely on the gravity of water, with no need for other forces, to accomplish the discharge of water and the formation of a vacuum environment in space A. When the height of space B is less than 10.34 metres, two other solutions may be implemented. One is to provide water pumps inside and outside the water discharge port for the forced discharge of water; the other is to create an environment with a pressure lower than that of the atmosphere outside the water discharge port, and use this to accomplish discharge of water by gravity. Of these three solutions, the solution in which the height of space B is greater than or equal to 10.34 metres is substantially the same as the solution disclosed in the vacuum device (CN85109100), whereas the other two solutions are substantially different from the solution disclosed in the vacuum device.

It must also be added that in step 5, when the drying process is nearly finished, the unloading of the vacuum load is accomplished by opening the inlet/outlet and introducing air to release the vacuum, but there is another preferable solution which may be implemented: instead of opening the inlet/outlet and introducing air, carbon dioxide gas or nitrogen gas, rather than atmospheric air containing oxygen, are introduced to release the vacuum, achieving air-exchange storage capable of preserving quality and preserving freshness safely.

It must be explained that in steps 4 and 5, the one-way valve on water discharge port 4 has the effect of preventing fluid from flowing into the container from outside, while not preventing fluid in the container from being discharged to the outside, and is necessary both for implementation of the solution itself and for implementation of the supplemented solutions. However, the cut-off valve becomes unnecessary in certain specific environments.

The prior art tells us that the simple water-drying device has a fatal flaw, which is the lack of effective remedial measures which may be taken in the event of load leakage.

The problem of load leakage is an unavoidable problem which must be faced in all vacuum environment technologies; absolutely no leakage is impossible. The solution of the load leakage problem has a direct impact on the industrial practicality of vacuum equipment. Two methods of solving the load leakage problem are no more than controlling the rate of leakage, and increasing the load to offset the leakage rate, so as to maintain the degree of vacuum to meet the vacuum process requirements.

Controlling the leakage rate is the only method possible in the case of a simple water-drying device. Although control of the leakage rate is also capable of ensuring that the drying process proceeds smoothly, it is not a highly reliable and effective solution; if air leakage occurs at a rate exceeding the permitted leakage rate, a simple water-drying device, relying on the method of water discharge, will be unable to guarantee the negative pressure needed for drying when there is no water to discharge, as a result of which the drying process will be interrupted. If air extraction equipment is added, the water-drying method will lose its main economic benefits, defeating the original intention of the inventor. Thus a substantive contribution of the present invention to the solution of the technical problem is the improvement of the simple water-drying device, and the addition of functions and elimination of flaws such that the device has a leak discharge function.

In the present invention, an additional space is added to the simple water-drying device, by means of which additional space water filling and discharging is carried out to load the vacuum and offset the occurrence of a leakage rate. The increase in cost is not high, and the principle by which a vacuum is created is the same as that used in the simple water-drying device. This method is used to maintain the vacuum environment, such that the water-drying device is able not only to create a vacuum environment, but also to eliminate air leakage so as to maintain the vacuum environment. The device can not only eliminate real leakage of air therefrom, but also has the function of eliminating the phenomenon of false leakage, ensuring the reliable execution of water equilibrium variable pressure drying, and increasing the level of reliability with which the process is accomplished using the device.

The improved water-drying device as shown in Fig. 2 is the result of adding an additional space C to the simple water-drying device, so that the space inside the water-drying device becomes three spaces: A, B and C. Space C is in communication with spaces A and B through a control device; space C can also be regarded as a modification of space B.

Space C is in fact a piston cylinder in which a soft piston consisting of liquid water reciprocates, and has an effect equivalent to that of a vacuum pump. By means of the motion of this piston, the air pumping function of a vacuum pump extracting air from space A of the container, and discharging air to the outside of the container, is realized.

A channel a controlled by a one-way valve is provided between the top of space A and space C in the improved water-drying device. Under the control of the one-way valve, fluid, principally air, is allowed to flow from space A to space C; flow in the opposite direction is not permitted or is controlled to be less than a permitted leakage rate. There is also a channel b controlled by a one-way valve between space B and space C. Under the control of the one-way valve, fluid, principally water, is allowed to flow from space B to space C; flow in the opposite direction is not permitted or is controlled to be less than a permitted leakage rate. A channel c is controlled by a cut-off valve is also provided in the middle of spaces A and B, for injecting the drying medium water into spaces A and B via space C; once injection of water is complete, the cut-off valve is in its normally closed state.

A one-way valve and cut-off valve controlling sealing are also provided at the top of space C. Space C can be filled with water or have the water level therein reduced repeatedly, so that gas released from within the material to be dried in spaces A and B, and gas that has leaked in, are sucked into space C through channel a, and then discharged from the container through one-way valve 5 at the top of space C; at the same time, water that has condensed and liquefied in spaces A and B flows into space C through channel b, so as to lower the water level in spaces A and B and ensure the smooth progress of the drying process.

In this case, space B can be contracted to a device in the middle of the two spaces A and C, which obstructs the movement of solid material but does not prevent liquid from flowing from space A to space C. This device, channels a, b and c and the valves controlling these channels can also be collectively referred to as a "device capable of obstructing movement of solid material but not obstructing movement of fluid". In this case, space A and space C are a space for storing material to be dried, and a space for accommodating liquid water, respectively.

The operating process thereof is as follows:
(1) Inlet/outlet 2 is opened, at which time channels a, b and c are in a closed state, and material to be dried, such as paddy or other plant seed material, is introduced into cavity A.
(2) Inlet/outlet 2 is closed and sealed, so that it serves the function of sealing to prevent the passage of fluid, at which time channels a, b and c are in an open state.
(3) Space C is filled with the drying medium water, filling space B, and the voids of the material to be dried and the space not occupied by the material in space A, through channel c, so that the air in spaces A and B is completely or almost completely displaced by water and discharged through the one-way valve at the top of space C.
(4) The water in space C is discharged so that the water level falls, and the water in spaces A and B of the container are discharged to the outside through space C under the action of the gravity of water; when the water level falls below the position of the filter plate 3, space A in the container forms a vacuum, and the process of drying the material to be dried by water equilibrium variable pressure drying begins.
(5) Once the drying process has begun, channel c is closed. Space C is filled with water and air discharged, and water is discharged from space C to extract air from spaces A and B, thereby achieving the improved function of solving the load leakage problem to maintain the vacuum, and ensuring smooth progress of the drying process.
(6) After a period of time, when the moisture content of material to be dried in space A has fallen to the required standard, the sealed inlet/outlet 2 is opened and air enters; water in space B is also discharged from space C under the action of air pressure, and the drying process ends.
(7) The finished dried product can be removed at this point. It is also possible to dispense with removal and use the device as a storage device for storing the finished dried product. In fact, the introduction of the material to be dried before the end of the drying process can also be regarded as the beginning of storage, with the storage after drying has ended being no more than a continuation of storage.

The above seven steps briefly relate the operating procedure for completing water equilibrium variable pressure drying and storage using an improved water-drying device. Step (5) in particular relates how the problem of vacuum load leakage is solved by repeatedly filling space C with water and discharging water therefrom in the improved water-drying device.

The structural features allowing the improved water-drying device to satisfy such a function have already been described in detail. The additional space that is added is in fact a modification of space B in the simple water-drying device. Thus the improved water-drying device is still two spaces, just like the simple water-drying device; the only difference is that the devices separating the two spaces in the two devices are different. However, these devices have a common functional feature, namely "obstructing the movement of solid material but not obstructing the flow of fluid material".

Space C in the improved water-drying device can be connected to a water conservancy facility, so that the water-drying device becomes an integral part of the water conservancy facility as a hydraulic drying device. This enables water power to be used for drying operations as a drying energy source, opening up a broad application field for widespread use of water equilibrium variable pressure drying. Specific solutions for the use of hydraulic resources in water-drying devices are set forth in the particular embodiments which follow, but it must be explained that the methods of adapting the water-drying method and water-drying device to suit local conditions are by no means limited to these types.

In both the simple water-drying device and the improved water-drying device, the first step of the water-drying operation is to put the material to be dried into the accommodating space in the container, the second step being to fill with the drying medium water. If the two steps are performed simultaneously and delivery is achieved by pipe, and the material to be dried is grain, this then becomes hydraulic delivery of grain by pipe. The water-drying device then becomes a terminal device for hydraulic delivery of grain by pipe.

Hydraulic delivery by pipe is used extensively, but is rarely used for grain. The reason is the technical prejudice that ingress of water must be avoided in the traditional storage of grain. Under traditional process conditions, the biggest problem in using hydraulic delivery by pipe for grain is that grain easily spoils when in contact with water, and the cost of drying is high; the present invention provides the possibility of realizing hydraulic delivery of grain by pipe.

Thus the device to which the present invention relates can be used for hydraulic delivery of grain by pipe, in order to lower the cost of transferring large amounts of grain between granaries and accomplish efficient transportation of grain, in which case the water equilibrium variable pressure drying device can serve as a component device of a system facility for the hydraulic delivery of grain by pipe. The water equilibrium variable pressure drying method can then be used for the drying of grain after hydraulic delivery of the grain by pipe.

The ancients said: "the greatest good is like water". In the water-drying operating process, water is not just a drying medium but also a pressure-varying medium. The gas in the airtight vacuum environment is mainly steam, which is a medium that transfers heat to the material to be dried, and performs heat exchange, by conduction, convection and radiation. Sealing between the water piston and the piston cylinder is also performed by the water itself, which has an hermetic sealing effect; water is also a barrier medium which obstructs air, the force driving the movement of the water piston is the gravity of water, and the balance pressure overcoming atmospheric pressure also arises from the gravity of water.

The present invention overcomes the technical prejudice that it is necessary to prevent the ingress of water in traditional storage of grain; waterproofing is changed to a love for water. Water is used to create a vacuum environment at low cost, the vacuum environment is used to evaporate moisture from within the grain particles, and drying of grain is accomplished in an environment containing water. The use of liquid water to prevent contact between grain and air is not only economical but also easily realized, and at the same time is also the realization of the processes of water washing and water separation, the processes of water washing, removal of impurities and grading of foodstuff raw material being realized during the storage process. The storage of crude grain is changed to the storage of clean grain that has been washed in water, fundamentally overturning the traditional mode of grain storage. The quality of foodstuff raw material can be improved, completely changing the original inefficient way of storing foodstuff raw material such as grain.

Water equilibrium variable pressure drying provides an way of using water power as a drying energy source, and will improve the efficiency of conversion of energy from the flow of water compared to using water power to generate electricity and then converting electrical energy to an airstream or thermal energy for drying operations. The embodiments will also show specific solutions for using water conservancy and pump irrigation facilities to maintain the degree of vacuum in the storage space, as well as specific solutions for using solar power to widen the temperature difference between night and day in the container used for drying operations, to improve the operation efficiency. In the airtight container, evaporation and condensation of steam are in dynamic equilibrium at a specific pressure and temperature; heat exchange by the processes of absorption of heat of vaporization by water as it evaporates, and release of thermal energy as it condenses and liquefies, is completed inside the airtight container. Thus the energy consumption of drying can in theory be reduced to a minimum, and it is clear that water equilibrium variable pressure drying is a new way of utilizing water power as an energy source, and saving energy when drying.

The specific heat of water is far higher than that of air, and steam, as a heat exchange medium, has a higher heat exchange efficiency, so the thermal energy released when steam condenses and liquefies is brought to the surface of the material to be dried by newly evaporated steam, so that moisture inside the material to be dried gains energy for evaporation.

Compared with other drying methods, in water-drying, the moisture contained in the material to be dried leaves the drying device in liquid form, rather than leaving in a gaseous state as in existing drying methods. This determines the objective energy-saving rule that the possibility of the water-drying method being capable of significantly lowering the theoretical energy consumption lies in the fact that the water-drying method enables the vaporization heat of water to be re-utilized, so that the energy consumption of drying can in theory attain a minimum.

Compared with other drying methods, in water-drying, the moisture contained in the material to be dried leaves the drying device in liquid form; the evaporation and liquefaction by condensation of the moisture contained in the material to be dried is in fact also a water distillation process. By using existing technology to collect the moisture contained in the material to be dried, as distinct from the drying medium water, when it leaves the drying device in liquid form, distilled water of relatively high purity can be obtained as a by-product of water-drying.

The above technical solutions reveal the processing results of the water-drying device in realizing vacuum storage and vacuum drying, and the functions of water washing, water separation, and hydraulic delivery by pipe. It is not difficult to see that, as a device for achieving and maintaining a vacuum, the water-drying device could also achieve the processing functions of vacuum impregnation and vacuum packaging without difficulty.

The realization of the processing functions of vacuum impregnation and vacuum packaging involves an impregnation container and packaging material. The present invention uses the universal plastic film bag as both an impregnation container and a packaging material, combined with the special demands of water-drying, and adopts a lyriform closure opening, in order to meet the process requirements of vacuum impregnation and vacuum packaging in water-drying processing.

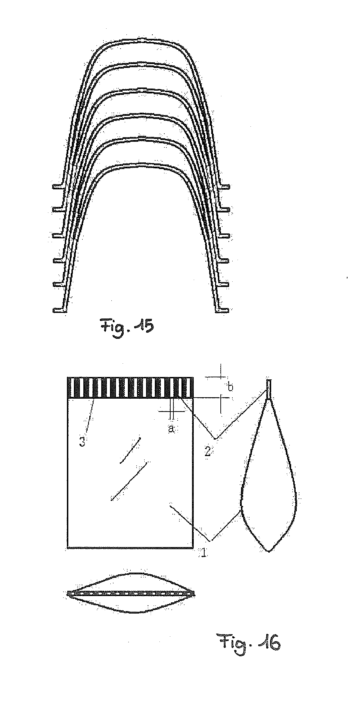

The plastic film bag with a harmonica-type closure opening is as shown in Fig. 16; the objective thereof is to form one-way channels for fluid to flow from inside the bag to outside the bag when the opening is closed. Gas that evaporates from the impregnation liquid, and moisture and gas from within the material packed in the bag, escape to the outside through the channels when the air pressure inside the bag is greater than that outside it. When the pressure inside the bag is less than that outside it, the channels will automatically close under the dual action of the atmospheric pressure outside the bag and the elasticity of the bag material itself.

In order to ensure that the channels will automatically close under the dual action of the air pressure outside the bag and the elasticity of the bag material itself, From the point of view of the elasticity of the material itself, the width a of the channels should not exceed 100 times the thickness of the plastic film, while the press-closure band width, i.e. the length b of the channels, should not be less than 3 times a.

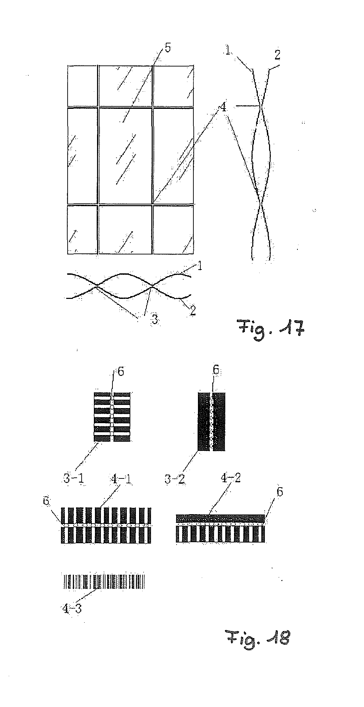

Since the plastic film bag with a harmonica-type opening undergoes harmonica-type closure after material has been packed inside, material packing and the bag formation process can be realized together with harmonica-type closure. Figs. 17 and 18 are schematic diagrams showing a plastic film being formed into a series of packaging bags, and harmonica-type closure; the packed material is inside the packaging bag at the same time as the packaging bag is being formed and harmonica-type closure is being performed.

Taking the rectangular packaging bags formed in a series from plastic film in Fig. 17 as an example, the longitudinal press-closure band 3-2 is combined with the transverse press-closure band 4-2 in Fig. 18, to form a series of bags with harmonica-type closure openings as shown in Fig. 16; one of the four sides of a single rectangular bag in the series is a harmonica-type closure opening. It is not difficult to see that when the longitudinal press-closure band 3-1 is combined with the transverse press-closure band 4-1 in Fig. 18, all four sides of a single rectangular bag in the series will be harmonica-type closure openings. When the longitudinal press-closure band 3-2 is combined with the transverse press-closure band 4-1 in Fig. 18, or the longitudinal press-closure band 3-1 is combined with the transverse press-closure band 4-2, two or three of the four sides of a single rectangular bag in the series will be harmonica-type closure openings. Through-holes 6 on the press-closure bands have the dual function of allowing easy tearing to separate the individual bags in the series, and enabling the one-way channels left in the harmonica-type closure openings to discharge fluid material.

Series packaging simultaneously accomplishes material packing, the bag formation process and harmonica-type closure, facilitating improvement of the efficiency of the packaging operation, and transportation. Series packaging can not only form rectangular packaging bags that are easily separated; the formation of easily-separable triangular, polygonal or even circular packaging bags in a series is also easily achieved.

The closed regions distributed at intervals on the press-closure band of a harmonica-type closure opening, and the one-way channels left between the closed regions distributed at intervals, can take the form of the barcode-like distribution shown in 4-3 in Fig. 18; this can be made to carry information about the packager and the packaged item, facilitating present-day control in which the circulation and quality of water-dried food are traced.

The features of water-drying determine that printed plastic film is not suitable for use as a packaging material. The barcode formed by the closed regions distributed at intervals on the press-closure band of a harmonica-type closure opening, and the one-way channels left between the closed regions distributed at intervals, can not only save on the cost of printing barcodes, but more importantly eliminate possible contamination of the food and water by the printing substance.

When the material packed in bags with harmonica-type closure openings is put into the water-drying device for water-drying processing, in the case where one side is a harmonica-type closure opening and the opening is facing upwards, the material packed in the bag and the impregnation liquid will not flow out through the channels as they are acted upon by gravity. Under negative pressure conditions, evaporation and liquefaction of the water in the space inside the bag proceed continuously, and the vacuum impregnation effect occupies the dominant position, with the vacuum drying effect occupying a secondary position. When multiple sides are harmonica-type closure openings, the liquid in the space in the bag will flow out through the channels, and the water contained in the material in the bag will be evaporated and discharged; liquefaction of the steam takes place mainly in the space outside the bag, and the vacuum drying effect occupies the dominant position.

When the material packed in bags with harmonica-type closure openings has the vacuum therein unloaded in the water-drying device, the channels close by themselves, and will automatically form vacuum packaging for the material packed in the bags. Before the bag packaging material with harmonica-type closure openings has the vacuum therein unloaded in the water-drying device, the vacuum drying effect causes the material packed in the bag to experience a drop in temperature at the same time as losing water, giving rise to a vacuum pre-cooling effect. Vacuum pre-cooling and vacuum packaging are one measure for improving the storage quality and extending the storage period of water-dried foods.

During vacuum packaging of the material packed in bags with harmonica-type closure openings, the packaging can repeatedly enter and leave the water-drying device or another vacuum space, for the degree of vacuum in the packaging to be supplemented or strengthened and increased, and the temperature to be decreased, until a second closure of the opening. The vacuum packaging of material packed in bags with harmonica-type closure openings can have the degree of vacuum therein strengthened in water-drying devices or other vacuum equipment at each transfer station during its circulation; there is no need to rely on movable vacuum equipment or movable cold storage equipment being transported around.

Regarding cereal biomass edible material in the form of granular plant seeds, if the drying and storage thereof can attain the processing results of vacuum drying and storage, then the requirements thereof are met. However, in the case of such types of biomass edible material as meat, fruit and vegetables, this vacuum drying and storage is not enough on its own, and must be combined with vacuum impregnation and vacuum packaging. The embodiments explain the use of such a method to produce low-salt cured meat, low-sugar preserved fruit and vacuum-packed clean vegetables, etc. This has an especially real significance, and opens up a broader range of applications for the water equilibrium variable pressure drying method.

The purpose of drying is to enable storage, but apart from drying, pickling and sugaring and other impregnation measures are also very effective methods of preserving fruit and vegetables at an early stage. Modern pickling and sugaring of fruit and vegetables has changed from a simple means of preservation to a processing technology for flavoursome foods. The water-dried foods that will be listed in the embodiments of the present invention will illustrate that when a water-drying device is used to achieve the processing function of vacuum impregnation, not only can the efficiency of pickling or sugaring of fruit and vegetables be improved compared to traditional processes, but the process can also be simplified.

Vacuum packaging is an extension of vacuum storage, and it is easy to accomplish vacuum packaging of a processing object after drying or impregnation processing by water-drying. With the help of the plastic film soft packaging material provided by modern industry, vacuum packaging can be easily achieved by simply changing the process of water-drying processing slightly, so that after a water-dried food leaves the water-drying device, further undergoes vacuum storage. This is of great help in increasing the added value of the water-dried food, and expanding the applications of water-dried food processing.

In summary, harvested edible material in the form of fresh biomass (as opposed to minerals) is put into a water-drying device in either loose or packaged form, for water-drying processing to be carried out; by means of vacuum drying or vacuum impregnation processing, storage thereof is achieved with preservation of quality or preservation of freshness. The storage with preservation of quality or preservation of freshness which follows water-drying processing can be continued by making use of the water-drying device or vacuum packaging. Water-drying devices in the fields, water-drying devices at transit points for storage, transportation, collection and distribution, all the way down to vacuum refrigerators in kitchens, together form a vacuum chain capable of preserving quality and freshness, as a replacement for the cold chain, achieving preservation of quality and freshness throughout the whole journey of water-dried food before it is eaten. Not only can water equilibrium variable pressure drying achieve energy savings during the drying process, it also integrates functions such as vacuum storage, vacuum drying, vacuum impregnation, vacuum packaging, vacuum pre-cooling, water washing, water separation and water transportation in a continuous processing procedure. Not only does this give the foods processed the properties of safe foods, but it also provides a way of accomplishing the effective use of water-drying equipment, the improvement of operational efficiency and the reduction of cost of food processing.

### Benefits

Most foods need to be dried when entering storage in the period immediately following harvesting, for instance plant seeds or tissue that has just been harvested, poultry or livestock that has just been slaughtered, or fish that has just died. In traditional drying methods, heating is required for drying; heating can encourage the multiplication of microbes and hence the spoiling process. The period before the moisture content has been reduced to the safe level for storage can be regarded as the quality preservation bottleneck period, during which these foods or foodstuff raw materials are inevitably attacked by microbes to varying degrees. During the drying process, substances arising from multiplication of microbes are left behind in foods to varying degrees. Some of these are harmful to humans, such as aflatoxins, and even if the content is low, they have a direct impact on the quality of the food. Although the water equilibrium variable pressure drying of the present invention extends the drying period, it has the drying carried out in oxygen-deficient conditions. This effectively inhibits the production of toxins that are left behind by microbes when they multiply, and reduces to a minimum the extent of attack by microbes suffered by these foods or foodstuff raw materials during the quality preservation bottleneck period.

The present invention provides an overall solution, which does not increase costs significantly, to the various problems faced during drying and storage of agricultural and forest products, and can also effectively reduce the construction cost and running expenses of specialized equipment.

The present invention provides a solution for preventing damage due to mould in harvested materials for agricultural and forest products, when harsh weather is encountered in the harvesting season. Even if harsh weather is not encountered, the removal of the need for airing can effectively reduce the consumption of manpower in the turning of grain during airing, as well as contamination of grain by pollutants in the air. It can also reduce the decomposition and destruction of vitamins in grain by ultraviolet rays in sunlight. Moreover, it can reduce the phenomenon of surface hardening which arises in drying processes carried out at ordinary pressure, such as exposure to the sun and high-temperature drying, improving the storage quality of the harvested materials and reducing the consumption of energy.

In particular, reduction in quality of oil crops caused by oxidation in air and microbial oxidation can be slowed down. Browning and decomposition of natural colours in most harvested materials can be inhibited.

Needless to say, the negative pressure oxygen-free environment in the airtight container enables loss of stored material caused by attacking microbes, insects and mice to be reduced to a minimum.

Water-drying can achieve ultra-dry storage of plant seeds very easily, reducing the moisture in plant seeds smoothly to 5% - 8% during storage at ordinary temperature.

Comparing water-drying with conventional drying methods, the fact that heat exchange during the processes of evaporation and condensation is completed inside the airtight container means that the energy consumption during drying can in theory attain a minimum.

Bringing together the costs and losses for the entire journey of a stored material from harvesting to consumption, and then considering factors which lower quality, although the present invention increases investment in equipment and technology, from the point of view of overall economic benefit, overall economic benefit over the entire lifespan of the equipment can be expected. If full consideration is given to the impact of the human health factor arising from food safety, a non-economic factor which is difficult to quantify, the economic benefits of the present invention are also a necessary choice of scientific progress in raising human living standards.

### Description of accompanying drawings

Fig. 1 is a schematic diagram showing the principles of a simple water-drying device. In the figure, 1 is a container formed from a material capable of preventing ingress and egress of fluid, 2 is a hermetically sealable inlet/outlet on the container, 3 is a filter plate, being a device for obstructing the movement of solid material but not obstructing the flow of liquid, and 4 is a water discharge outlet on the container. In the figure, space A is a space for storing material to be dried and a finished dried product.
Fig. 2 is a schematic diagram showing the principles of an improved water-drying device. 1, 2, 3 and 4 in the figure are the same as in Fig. 1. The device 3 for obstructing the movement of solid material but not obstructing the flow of fluid consists of controllable channels a, b and c at the top, bottom and middle. The components enclosed by box 3B in the figure are both device 3 and a substitute for space B. In the figure, 5 is a one-way valve for air discharge, while C is an additional space forming part of the container 1, separated and distinct from space A.

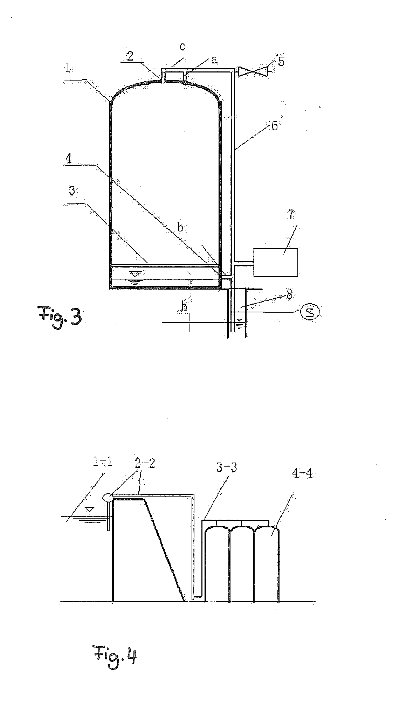

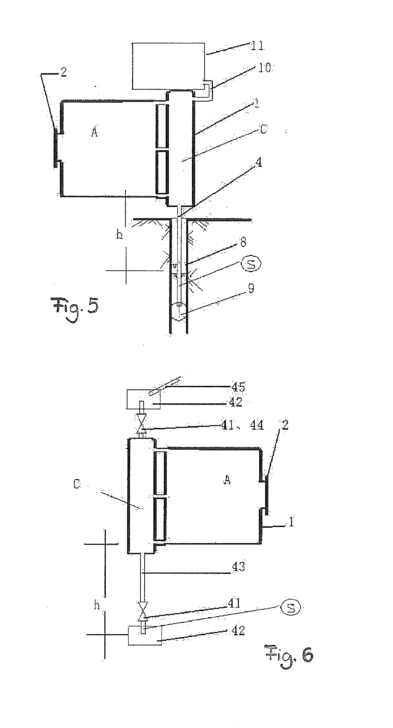

Fig. 3 is a sectional schematic diagram of a water-drying silo. 1, 2, 3 and 4 in the figure are the same as in Fig. 1, 5 is the same as in Fig. 2, 6 is a pipe which serves as both space C in Fig. 2 and as a hydraulic delivery pipe, 7 is equipment for hydraulic delivery by pipe, 8 is a water well or a reservoir, h represents the difference in water levels between that in the granary and that in the well or reservoir, and a, b and c are channels identical to those in Fig. 2.
Fig. 4 is a simplified drawing showing the positions of water transportation and water-drying granaries in front of a dam. 1-1 is the water stored in the reservoir, 2-2 is a dam-mounted siphoning system, 3-3 is a system for hydraulic delivery by pipe to the granaries, and 4-4 is a series of connected water-drying silos.

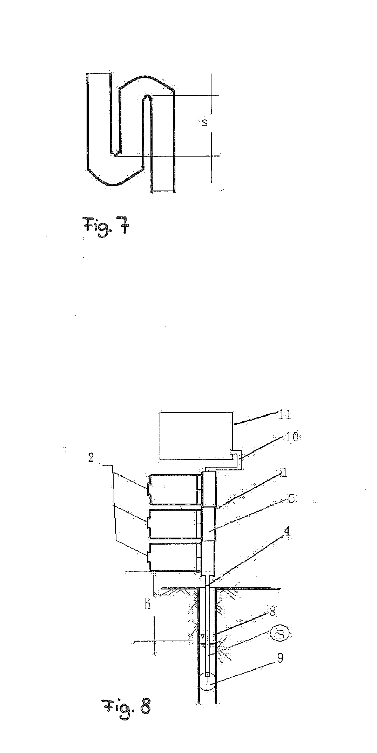

Fig. 5 is a schematic diagram showing the operating principles of a water-lifting water-drying storage room. 1, 2 and 4 in the figure are the same as in Fig. 1, 4 being connected to a motor-pumped well pipe, 8 is a water well, 9 is a submersible pump, 10 is a top-connected water pipe in communication with a upper water storage tank 11, h represents the height difference between the water levels in the storage room and the well, and S is an S-shaped curved pipe, taken from Fig. 7, located at the water discharge end for preventing ingress of air caused by a reduction in the water level; the ring around S indicates that it is a cited label (similarly hereinafter).
Fig. 6 is a schematic diagram showing the operating principles of a falling-water water-drying storage room. 1, 2 and C in the figure are the same as in Fig. 2, 41 is an upper/lower water valve, 42 is an upper/lower water tank, 43 and 44 are water pipes connected to water discharge ports of the water-drying device, 45 is a water feed pipe connected to falling water, and h represents the height difference between the storage room and the lower water tank.
Fig. 7 is an S-shaped curved pipe located at a water discharge end for preventing ingress of air caused by a reduction in the water level. In the figure, s is the distance between the two bends, which is not less than the pipe diameter.
Fig. 8 is a schematic diagram showing several of the water-drying storage rooms of Fig. 5 connected in series.

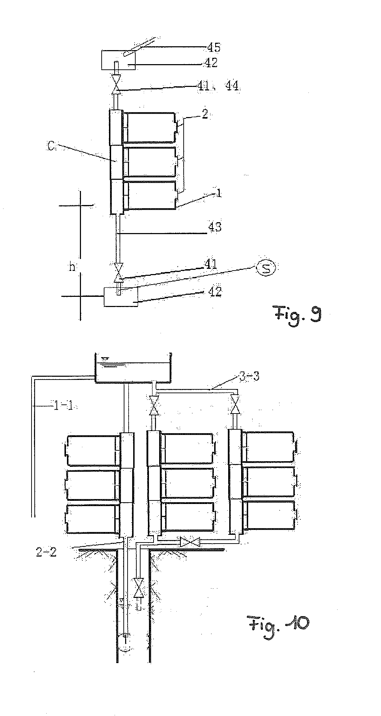

Fig. 9 is a schematic diagram showing several of the water-drying storage rooms of Fig. 6 connected in series.
Fig. 10 is a schematic diagram showing several of the water-drying storage rooms of Figs. 8 and 9, connected first in series and then in parallel, and also connected in parallel with water pipe. In the figure, 1-1 is a pipe leading to water, 2-2 is a pipe for the plurality of water-drying storage rooms, connected in series, to draw water through, and 3-3 is a water-return pipe for the plurality of water-drying storage rooms after they have been connected first in series and then in parallel.

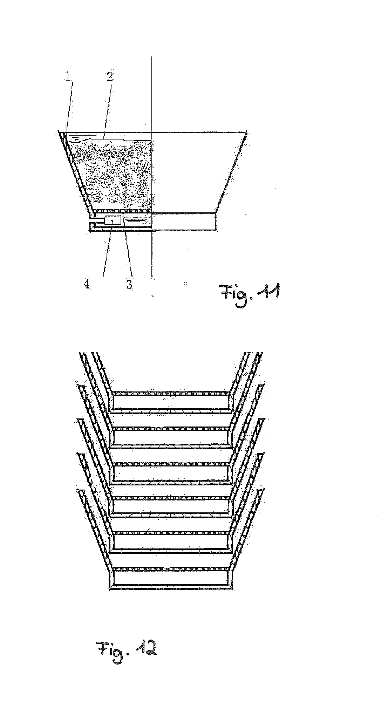

Fig. 11 is a half-sectional schematic diagram of an open-topped water-drying granary. In the figure, 1 is a granary body, 2 is a soft granary sealing lid, 3 is a filter plate, and 4 is a water discharge port at the granary base.
Fig. 12 is a sectional drawing of open-topped granaries in a stacked arrangement.

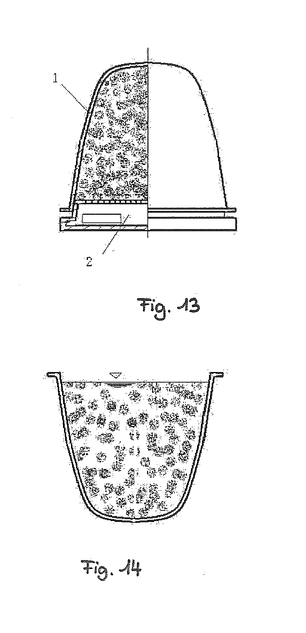

Fig. 13 is a half-sectional schematic diagram showing the operating state of an inverted water-drying granary. In the figure, 1 is a bell-shaped granary body, and 2 is a granary base assembly.
Fig. 14 is an inverted drawing of an inverted water-drying granary during loading.
Fig. 15 is a sectional schematic diagram of granary bodies of inverted granaries in a stacked arrangement.
Fig. 16 is a schematic diagram of a plastic film packaging bag and a harmonica-type closure opening. In the figure, a is the width of one-way channels left in the harmonica-type closure opening, b is the press-closure band width of the harmonica-type closure opening and the length of the one-way channels, 1 is a bag, 2 is a press-closure band of a harmonica-type closure opening at the opening of a bag, 3 is closed regions distributed at intervals on the press-closure band, and the one-way channels are left between the closed regions distributed at intervals.
Fig. 17 is a schematic diagram showing the formation of a series of packaging bags and harmonica-type closure openings from a plastic film. In the figure, 1 and 2 are front and back plastic films of a bag, 3 and 4 are longitudinal and transverse press-closure bands at the edges of a bag, 5 is packaging bags formed by front and back plastic films and longitudinal and transverse press-closure bands at the bag edges, with material being present inside the packaging at the same time; the packaging bags are connected to each other naturally by the press-closure bands.
Fig. 18 is a detailed drawing of the longitudinal and transverse press-closure bands at the bag edges when a series of packaging bags and harmonica-type closure openings are formed from a plastic film. Adjacent packaging bags that are naturally connected together have continuously distributed through-holes 6, which are easily torn apart, on the press-closure bands at the bag edges. The through-holes serve the dual function of allowing easy tearing and enabling the one-way channels left in the harmonica-type closure openings to discharge a fluid material.

### Preferred embodiments of the present invention

### Device example 1: water-drying silo

In Fig. 3, 1 is a vertical sectional schematic diagram of a water-drying silo. The granary body as a whole may be regarded as a common vertical cylindrical tank, made of rigid material, and need only satisfy the limiting requirements in terms of restricting the air leakage rate for the silo. A horizontal sectional schematic diagram is omitted. A circular shape is appropriate; this not only saves materials, but its mechanical performance is generally acknowledged in the prior art. The operating principles thereof are the same as those of the improved water-drying device in Fig. 2; it is simply one of the embodiments. The structure of the tank need only have the structural features of the simple water-drying device. It differs from the simple water-drying device in Fig. 1 and the improved water-drying device in Fig. 2 in that the inlet is connected to the hydraulic pipe delivery equipment. The outlet is not shown but is located at a lower part of the tank; any number of solutions can be found in the prior art, and these will not be repeated here.

Pipe 6 of the hydraulic delivery system also serves as a space C. Pipe 6 together with a, b, c, 5, 7 and 8 are hydraulic delivery pipe terminals, and combine with granary body 1 to form a functional space C realizing an improved water-drying device. The height h need only be greater than the height of a water column which can be supported by atmospheric pressure at the position of the water-drying silo, and is by no means a constant; under typical conditions, the requirement can be met if h is greater than 10.34 metres. This requirement can be easily met by means of wells for drawing water and irrigation.

This water-drying silo is suitable for storing quite large amounts of material, for example staple grains such as maize, paddy and wheat. The height of the silo may reach nearly 100 metres, and prior art in the field of hydraulic pipe delivery means that the rapid loading thereof is not a problem. Within the silo, the maximum and minimum pressures vary between X106 and X103 Pa. Automatic water discharge by gravity allows the pressure inside the granary to be reduced after loading to achieve a vacuum of between 2000 Pa and 9999 Pa; this degree of vacuum can be maintained simply by using a water pump to realize the vacuum maintenance function of the improved water-drying device. The drying mechanism is the same as the operating process of the improved water-drying device, and shall not be repeated.

After completion of the process of drying the dried material, the silo naturally becomes a space for storing the finished dried product. For convenience of grain extraction, the granary may be filled with nitrogen gas or carbon dioxide gas, the pressure thereof being made approximately the same as that of the atmosphere outside the granary, with the vacuum negative pressure being unloaded; thus the functions of guarding against sprouting, microbes, insects and mice of the drying stage continue to be maintained in the granary.

There is no restriction on the water content of grain entering the water-drying silo. Paddy that has just been harvested and threshed can enter the silo directly even with a water content of as much as 30%. The period between harvesting in the fields and entering the granary once the moisture content has been reduced to a level meeting the requirements for storage in the atmosphere is the stage during which loss of grain principally occurs; reducing the restrictions for entry to the granary so that the grain can enter it as soon as possible is one of the best means of reducing loss of grain. Compared to the prior art, the water-drying silo makes the prompt entry of grain to the granary after harvesting a reality.

Water is needed for the loading of the water-drying silo and the drying process; the lifting of water consumes energy. In Fig. 4, a water-drying silo is built in a position below the dam of a reservoir, and reservoir water is used for the water circulation system of the water-drying silo by means of a siphoning system. This is one way of making effective use of water power to perform loading, create a vacuum and maintain the vacuum.

The realization of the drying process of water-drying relies upon the different dynamic equilibriums in the granary at each instantaneous point in time, caused by temperature difference variation between night and day outside the water-drying granary, and may be affected if the diameter of the silo is increased beyond a certain size. If sunlight reflecting devices, belonging to prior art in the field of solar energy, are arranged outside the silo, in the environment shown in Fig. 4, so as to concentrate light rays of solar energy on the outer surface of the metallic water-drying silo, the overall magnitude of the temperature difference variation between night and day in the silo can be increased, increasing the drying intensity and improving the drying result.

The silo is used for storing crude grain. The water filling the volume thereof only occupies the voids in the pile of grain. Although rapeseeds are small, the voids amongst them still account for as much as 35%. The utilization rate of the grain storage space of the silo is not affected by the use of water for water-drying.

Of course, the use of a water-drying granary for in-granary drying during storage of grain is a new topic. However, it is not difficult to find solutions for the other technical details in the prior art. This Description is concise and to the point, and so will no longer describe them in detail one by one.

The water-drying silo provides a new option for the construction of a ten-thousand-ton grain storage facility, and as a measure for ensuring the safety of grain, can be applied in the drying, storage and even transportation of grain.

### Embodiments of the invention

### Device example 2: water-drying storage room

If the water-drying silo is regarded as a specialized device, then the water-lifting water-drying storage room shown in Fig. 5 is a general-use device. There are numerous types of agricultural product, and even more types of food requiring drying or other processing. The water-drying storage room can be used for processing of many types of food in terms of drying and storage, as general-use drying/storage processing equipment. It simultaneously serves the functions of drying, storage, processing and packaging, etc.

In the figure, by connecting space C with the water-lifting facility formed by 4, 8, 9 and 10, a hydraulic water-drying storage system can be formed. Water is a substance necessary for human survival, as is food. The functions and operating mechanism of the water-drying storage room are the same as those of the improved water-drying device shown in Fig. 2, so the operating process thereof will not be repeated.

It is emphasized here that ubiquitous facilities supplying water by means of motor-pumped wells, such as water towers and irrigation stations, can all serve as sources of hydraulic energy for water-drying storage rooms. Taking water towers and rooftop water tanks as an example, when water is lifted, the pump lifting the water will stop working when the upper water tank is full. During intermittent operation of the water-lifting pump, the water inside the elevation pipe will inevitably fall under the action of gravity. In existing facilities, this portion of energy is simply wasted, whereas the facility shown in Fig. 5 allows this portion of energy to become the driving force for the creation and maintenance of a vacuum environment. In this way, the water-drying storage room is combined with water-lifting and water supply facilities of farms, farming villages and peasant householders to become a commonly used facility. The water-drying storage room can thus make use of the residual energy of water-lifting to realize freshness-preserving storage, in-granary drying and other processing of all sorts of agricultural products on a widespread basis.

Water-lifting requires water-lifting equipment. In situations where natural conditions provide a supply of water, as in the case of a mountain spring, a water-drying storage room can also make use of hydraulic energy in the manner shown in Fig. 6. However, the operating procedure is slightly different. A lower valve is closed and an upper valve opened, space C being filled with water to discharge air. The upper valve is closed and the lower valve opened, so that the water in space C falls due to its own weight and achieves evacuation. The water-drying silo can serve as drying equipment for plant seed foodstuffs, whereas the water-drying storage room can expand the types of drying operations to include all foods. This includes packing liquid milk and fruit juice in bags made of a material that is air-permeable but not water-permeable, placing these in the water-drying storage room and drying slowly, with the final product of drying being milk powder or crystalline fruit powder with a low water content.

The series of connected water-drying silos of example 1 in Fig. 4 is an example of water-drying equipment and water conservancy pipes being connected in parallel.

The storage rooms of example 2 can be connected in series for use as in Figs. 8 and 9, or connected in parallel for use as in Fig. 10.

It is not difficult to connect a number of water-drying storage rooms in a set of water conservancy/irrigation facilities in series and in parallel using control measures in the prior art.

It is not only possible to have water-drying equipment form a permanent water-drying facility together with water conservancy equipment in the manner of examples 1 and 2; the principle of the simple water-drying device can be applied as a movable water-drying container. The containers of examples 3 and 4 can be used as transportation containers.

### Device example 3: open-topped water-drying granary

The inventor gives this the name of open-topped water-drying granary. It is capable of realizing the method provided by the present invention simply and conveniently, and is constructed as shown in the cross section in Fig. 11.

The open-topped water-drying granary consists of a granary body 1, granary base 4, intermediate filter plate 3 and soft granary lid 2 for the top opening. The granary base is fitted with a water outlet to the outside with a one-way valve. A water pump, which can be motor-driven or hand-driven, may be fitted in the water outlet. It is also possible to connect a water pump outside the water outlet temporarily to discharge water.

The granary body and granary base are connected as an integral whole and made from a rigid material, which can be a common material such as thin metal sheeting or plastic; it is perhaps better that the heat conducting properties of metal material should be utilized. Suitable choices for the soft granary lid for the top opening are a single sheet of soft thin rubber, or alternatively a single piece of soft plastic film material; it need only be impermeable to air and capable of being fitted to the walls of the granary opening.

Explanation of the method of use: A plurality of open-topped granaries are stacked (Fig. 12) and transported to the site of use, which might be in or at the edge of the field of harvested material, or a place where harvested material is piled up. The open-topped granaries are placed on level and firm ground in the manner shown in Fig. 11, the intermediate filter plate 3 is placed on the granary base 4, and threshed paddy grains that have just been harvested are piled up on top of the filter plate, almost up to the granary opening. The water outlet is blocked with a stopper, and water is poured into the granary to submerge the threshed paddy grains, the water level also being brought almost to the granary opening. The soft granary lid 2 for the top opening is then set in place, being fitted to the inside walls of the granary body. Water is then poured onto the lid so that the soft granary lid 2 sticks closely to the paddy grains and to the inside walls of the granary body, completing the loading operation.

After completion of the loading operation, the stopper blocking the water outlet is removed; the water inside the granary will flow out under the action of gravity. While the water is flowing out of the granary through the water outlet, careful inspection is made of the state of hermetic sealing of the soft granary lid at the top opening, the hermetic sealing being adjusted to ensure that no air is allowed to enter the granary.

If the state of hermetic sealing of the top granary opening is good, a granary base water pump or externally connected water pump is used to carry out the water discharging operation, to bring the water level inside the granary below the intermediate filter plate 3. A negative pressure vacuum environment forms inside the granary, and the open-topped granary enters the operating state. Thereafter, the degree of vacuum in the granary can be maintained by discharging water continuously to keep the water level below the intermediate plate 3. In such a vacuum environment, the paddy (or other material) in the granary can be dried slowly, and the temperature difference between each day and night can become a source of energy for drying. One way of maintaining the water level at the granary base is to perform a water discharging operation in the early morning each day, i.e. at the time of day when the air temperature is at its lowest.

Such an open-topped granary can be stationed at a peasant home or a grain storage site and used throughout the year. Even when drying of the material in the granary is complete, it is not necessary to perform a drying operation every day; the water on the soft granary lid at the top opening and the water level at the granary base can still protect the material in the granary from contact with oxygen in the air, thereby preventing attack by mice, insects and microbes, and extending the storage maintaining period of the material being stored until it must be removed from the granary for use.

Such an open-topped granary is capable of standardizing mass production, and becoming a storage/transportation container for staple products of grain. As long as the volume thereof is standard, it can serve as a measuring implement for trading grain staples. Grain purchasing enterprises could also issue such implements to peasant households engaged in grain production, to store grain at the peasant household.

Such an open-topped granary could also be used as an implement for manual threshing operations at a peasant household.

### Device example 4: inverted water-drying granary

The inventor has given this the name of inverted water-drying granary. It is specialized equipment for realizing the method of the present invention simply and conveniently, and is constructed as shown in the cross section in Fig. 13.

The inverted water-drying granary consists of a bell-shaped granary body 1 and a granary base assembly 2, which are connected together. When connected, these two parts exhibit a sealed state, forming a sealed storage space in the granary. A device for obstructing the flow of solid material but not obstructing the flow of liquid water is provided on the granary base assembly 2, and has the same function as the intermediate filter plate in example 1. When a sealed storage space is formed in the granary, this device divides the sealed space into two parts.

The granary base assembly is fitted with a water outlet to the outside with a one-way valve. A water pump, which can be motor-driven or hand-driven, may be fitted in the water outlet. It is also possible to connect a water pump outside the water outlet temporarily to discharge water.

Fig. 15 is a schematic diagram showing stacked bell-shaped granary bodies 1. As in example 1, stacking facilitates transportation and reduction of the space occupied when the granaries are not in use.

Explanation of method of use: the bell-shaped granary body 1 is inverted so that the opening is facing upwards, and packed with newly harvested plant seeds to be dried or stored, for instance paddy, up to a suitable height. After pouring water in to submerge the material (Fig. 14), the granary base assembly 2 is placed on top, and connected to assume a sealed state, forming a sealed storage space inside the granary. The whole granary is then inverted to achieve the state shown in Fig. 13, at which point a water discharging operation can be carried out to form a vacuum by reducing the pressure in the sealed storage space inside the granary, and the granary enters the operating state. It is called an inverted water-drying granary because it is inverted during loading.

Thereafter, the degree of vacuum in the granary can be maintained by continuously discharging water to keep the water level in the granary within the granary base assembly 2. In such a vacuum environment, the paddy (or other material) in the granary can be dried slowly, and the temperature difference between each day and night can become a source of energy for drying. One way of maintaining the water level in the granary is to perform a water discharging operation in the early morning each day, i.e. at the time of day when the air temperature is at its lowest.

Such an inverted water-drying granary can be stationed at a grain storage site and used throughout the year. Even when drying of the material in the granary is complete, it is not necessary to perform a drying operation every day; the water level in the granary base assembly 6 can still protect the material in the granary from contact with oxygen in the air, thereby preventing attack by mice, insects and microbes, and extending the storage maintaining period of the material being stored until it must be removed from the granary for use.

Such an inverted water-drying granary is capable of standardizing mass production, and becoming a storage/transportation container for staple products of grain. As long as the volume thereof is standard, it can serve as a measuring implement for trading grain staples. Grain purchasing enterprises could also issue such implements to peasant households engaged in grain production, to store grain at the site of production.

In the container-type water-drying devices of examples 3 and 4, given that it is possible to temporarily connect a water pump outside the water outlet for discharging water, it is also possible to connect a vacuum pump externally to discharge air, in response to the occurrence of a situation in which there is no water to discharge and drying is interrupted. It has already been stated herein that "if air extraction equipment is added, the water-drying method will lose its main economic benefits, defeating the original intention of the inventor." The motivation for this statement is no more than the desire to improve, and it does not preclude or restrict the use of the method of temporarily connecting a vacuum pump externally to discharge air if a situation should arise in which there is no water in the simple water-drying device and drying is interrupted. The method of temporarily connecting a vacuum pump externally to discharge air is still economical if one temporary externally-connected vacuum pump is used for several container-type water-drying devices in turn.

This Description is concise and to the point, and has omitted the description of the presence of system elements such as pressure meters and operation control elements. There are innumerable solutions for these in the prior art which may be used in the equipment of the present invention, and those skilled in the art may choose freely from these solutions. This Description need not list them, nor is it capable of doing so.

When water-drying equipment is used to realize the method of the present invention, many different varieties of corresponding products are produced, which are known collectively as water-dried foods. Different types have different features; features which arise in water-dried foods as a result of the water-drying process are described below by means of examples of various kinds.

### Water-dried food example 1: water-dried grain

There are many varieties of grain, which for the most part must be dried and then stored after harvesting. If water-drying is used to process the grain, the equipment of examples 1, 3 and 4 can be used to dry and store bulk grain, while the equipment of example 2 can be used to dry and store packaged grain. Only two examples are given below to illustrate the impact of water-drying of grain on other process steps in grain processing; these examples may be extended to the remaining varieties of grain which are suitable for use.

### Water-dried paddy:

Overcast, rainy weather is often encountered during the paddy harvesting season, but the water-drying process is unaffected by the weather; rainwater can also become a source of drying medium water. Harvested and threshed paddy or unthreshed ears of grain can be directly loaded into the water-drying granary. There is no restriction on the moisture content at the time of entry to the granary. The drying process should be begun within ten hours of the grain entering the granary; the drying process can last for several weeks or several months. When the moisture content of the paddy in the granary has fallen to 14%?.5%, oxygen-free gas can be introduced to unload the vacuum air pressure; alternatively, unloading thereof can be allowed to take place slowly and naturally, with the water filling and air discharging operations being discontinued. At this point, drying is complete, and the paddy still stored in the granary of the water-drying equipment can be referred to as water-dried paddy.

Water-dried paddy has its own notable features distinguishing it from paddy processed with existing drying technology. Water-dried paddy has uniform moisture content; the moisture content of paddy in the same granary will not vary by more than 0.5% between grains. Cracked grains and yellow paddy will become quite rare, and the phenomenon of aging will not occur. The overall polished rice rate is far higher than that of paddy dried in the atmosphere according to existing methods. The quality and freshness of paddy can be maintained for a longer time.

Paddy must be processed into husked rice before it can be eaten, and the process for processing water-dried paddy into husked rice will be somewhat different on account of its own characteristics. The process of removing the glume from water-dried paddy is quite easy; this is due to the uniformity of moisture content too. The process of rolling the coarse rice to make husked rice is also made easier by the small difference in hardness between the inside and the outside of water-dried paddy. Moreover, investment in processing and equipment for process steps such as quality adjustment and colour separation can be saved, while still being able to obtain polished rice of superior quality for consumption.

The storage function of the water-drying equipment places no restrictions on the moisture content of water-dried paddy when it enters the granary; loss of paddy during harvesting and in the drying stage after harvesting can be reduced to the greatest extent possible. The freshness-preserving storage function and anti-mouse, anti-insect and anti-mould features thereof can reduce the loss during storage to a minimum, while bringing about an overall improvement in the storage quality of the paddy.

### Water-dried maize:

Maize is harvested in a hot season, and this makes maize a variety of grain for which losses due to mould growth are quite serious. On the one hand, water-drying can reduce contamination of maize by aflatoxins; on the other hand, water-drying can accomplish drying of entire ears of maize. The mechanized operation of removing ears of maize from the plants, and the mechanized operation of removing dried maize grains from the cobs, have both been realized in the prior art. However, the mechanization of peeling away the outer bud skin of ears of maize has been less than satisfactory, because the high water content and low hardness of maize grains before drying lead to crushing of the maize grains. The failure to peel away the outer bud skin in the prior art has a direct impact on the drying of maize grains by ventilation, and becomes a major factor in mould growth in maize grains. Water-drying allows the whole maize ear to enter the drying process step; the outer bud skin of maize ears and the cobs after drying have far lower hardness and resistance to damage than dried maize grains, and by making use of this difference in hardness and resistance to damage, the outer skin and cobs are removed in one step by rolling and separation. This solves the problem of less than satisfactory mechanization of the removal of the outer bud skin from maize ears, and is also a solution for the mechanization of the operations undergone by maize along the journey from harvest to granary using the water-drying operation.

In this way, the harvesting of maize and entry to a granary becomes the direct entry to a water-drying granary of whole ears of maize obtained from a maize harvester, for water-drying to be carried out. Whole dried ears of maize with a water content of 12 - 14%, can be directly rolled to achieve crushing of the maize bud skin and cob; after screening to remove crushed maize bud skins and cobs, dried maize grains are obtained, so that the mechanization of maize threshing is accomplished more simply and conveniently.

### Water-dried small miscellaneous grains:

Grains include not only the seeds of grass plants such as paddy and maize, but also the seeds of bean plants. There are many varieties of kidney beans, which are not produced in large quantities. Soybeans in particular have quite high protein and fat contents, and are susceptible to attack by mould and microbes.

By packaging these small miscellaneous grains in plastic film bags with harmonica-type closure openings promptly after harvest, putting these bags into the equipment of example 2 and subjecting them to drying, it is possible to improve the storage quality of the small miscellaneous grains and reduce loss due to attack by mice, mould and insects, while at the same time realizing the vacuum packaging of the small miscellaneous grains as merchandise.

### Water-dried fresh grain:

Fresh grain products for consumption are also necessary as a choice in the diversification of human food. They include tender maize ears, tender peas, tender broad beans and young soya beans, etc., and are delicacies which people can enjoy only during the harvest season. Outside of the harvest season, they can only be enjoyed by relying on cold storage equipment or out-of-season cultivation technology. The water-dried encapsulation in packaging bags with harmonica-type openings and the water-drying equipment provided by the present invention allow fresh grain products to be preserved from the harvest season to a non-harvest season at low cost.

Tender maize ears, tender pea pods, tender broad bean pods and young soya beans are picked from the plants and promptly packaged in plastic film bags with harmonica-type closure openings. After packaging, they are promptly stacked in the water-drying device, and air is discharged in a vacuum. After air discharge, they are removed from the water-drying device, and water-dried fresh grain, with its original flavour, is then in vacuum packaging. Secondary closure of the openings is performed to produce vacuum packaged water-dried fresh grain.

If, in the above process, a seasoning stock is added to the plastic bag before the harmonica-type openings are sealed, the vacuum air discharge process is also a vacuum impregnation process, and the vacuum packaging then contains seasoned water-dried fresh grain.

If vacuum packaged water-dried fresh grain is combined with a food storage/transportation cold chain, all-season supply of seasonal water-dried fresh grain can be accomplished.

### Water-dried food example 2: water-dried oil

oil crops are categorized as herbal and woody, and the majority need to be dried and stored before extraction of oil. Only one example is given below to illustrate the impact of oil water-drying on the dry storage quality of oil before processing.

### Water-dried peanuts:

Peanuts grow underground. Surface soil is rich in all kinds of moulds; peanuts have the ability to resist attack by mould during the growth process, but after ripening, the plant's vitality drops, and this resistance ability decreases. High levels of moisture, high temperature, and an increased contact area with air after peanuts leave the earth lead to vigorous multiplication of mould. During the quality preservation bottleneck period, peanuts are extremely susceptible to attack by mould, which causes spoiling, and added to this is the non-uniform presence of spoiled peanuts in traditional drying, making peanuts a variety of food with relatively high aflatoxin contents.

Harvested peanuts are immediately put into the water-drying granary. Water washing can remove residual mud from the surface of peanut shells; the ingress of water inside the shells of peanuts with cracked shells will lower their buoyancy, so they sink to the bottom, giving rise to a flotation function. The intact peanuts remaining after impaired nuts have been removed by water washing and flotation are not likely to spoil as a result of attack by mould.

Once the process of water-drying the intact peanuts has begun, the oxygen-deficient environment can inhibit the multiplication of residual mould effectively. Although the drying process is long, it is a freshness preservation storage process, which reduces the possibility of spoiling due to attack by mould during the quality preservation bottleneck period to a minimum. The uniformity of slow drying can eliminate the spoiled peanuts which are easily caused by non-uniform drying, and overall, the aflatoxin content of the peanuts in the granary is kept within a safe range.

The main characteristic of having peanuts enter the granary promptly for water-drying is that the aflatoxin content can be kept within a safe range.

Rapeseed and tea-oil seeds are both suitable for water-drying processing to keep the aflatoxin content within a safe range.

Water-dried food example 3: water-dried fruit, vegetables and edible fungi

### Water-dried nuts and dry fruits:

The onset of splitting of the spherical bud indicates that chestnuts are ripe. Picking the chestnuts from the tree together with the spherical buds, and promptly putting them into the water-drying granary for water-drying, allows the chestnuts to promptly enter an oxygen-free environment where incubation of insect eggs therein is inhibited. Damage from insects is a significant factor affecting the quality of the chestnut fruit; the process of removing the spherical bud in the prior art is actually the process of incubating insect eggs.

The water-drying methods for peanuts and chestnuts can be used for the drying and storage of all nut products, to produce water-dried nuts or dry fruits.

### Water-dried fresh fruits:

Ripe fruit is picked from the plant and promptly packaged in plastic film bags with harmonica-type closure openings. After packaging, they are promptly stacked in the water-drying device, and air is discharged in a vacuum. After air discharge, they are removed from the water-drying device, and fresh ripe fruit is then in vacuum packaging. Secondary closure of the openings is performed to produce vacuum packaged water-dried fresh fruit for the market. The oxygen-free environment in the vacuum packaging can inhibit over-ripening and spoiling of the fresh ripe fruit.

The method of avoiding over-ripening and spoiling by picking unripe fruit from the plant so that it ripens later on the way to market, which is currently in vogue, is chosen because of a lack of other options. Vacuum packaging of water-dried fresh fruit offers an option for putting ripe fruit on shelves without affecting the quality of the fruit, and can also extend the shelf life of fresh fruit effectively.

### Water-dried dried fruits:

The procedure for processing water-dried dried fruits is similar to that for water-dried fresh fruits. They differ in that the periods of time for which air is discharged in a vacuum after stacking in the water-drying device are different, and the secondary closure times are different. The secondary closure is performed earlier in the case of water-dried fresh fruit, and later in the case of water-dried dried fruit. Taking dates as an example, fresh dates, dry dates and dried dates are different by virtue of their water contents being different. Dates are picked from the plant and promptly packaged in plastic film bags with harmonica-type closure openings, then stacked in the water-drying device; by varying the processing time, vacuum packaged products of fresh dates, dry dates and dried dates can be obtained. The right moment for secondary closure is determined by market prices, and can maximize the economic benefit of the product.

### Water-dried candied and preserved fruit:

The procedure for processing water-dried candied and preserved fruit is similar to that for water-dried dried fruits and water-dried fresh fruits. The difference is that before being packed in the plastic bag, the fruit undergoes necessary processing such as removal of skin and kernels, addition of sugar and pre-boiling. It is packaged in plastic film bags with harmonica-type closure openings and promptly stacked in the water-drying device, and air is discharged in a vacuum. By varying the processing time, vacuum packaged products of candied or preserved fruits can be obtained.

Sugaring is an extremely effective method of preserving fruit at an early stage. Nowadays, the sugaring of fruit has changed from a simple means of preservation to a processing technology for uniquely flavoured products of fruit and vegetables. The function of pre-boiling as applied to candied and preserved fruit is to discharge air and kill microbes, whereas this process step can be omitted in the case of water-dried candied and preserved fruits. The functions of inhibition of microbes, air discharge and drying in the water-drying environment are fully capable of replacing the function of pre-boiling, so that vitamins in the fruit can be preserved intact to the greatest extent possible.

The high sugar content in traditional candied and preserved fruits is a major requirement for the preservation of quality during storage thereof. A high level of sugar is detrimental to human health, whereas water-dried candied and preserved fruits have vacuum packaging and so can have a lower sugar content; vacuum impregnation, vacuum air discharge and drying are integrated in a single process, to simply and conveniently produce a low-sugar crisp product of candied or preserved fruit with uniform sugar content.

It is not difficult to see that in addition to the difference in packaging, water-dried candied and preserved fruits are a world apart from traditional candied and preserved fruits in terms of quality in eating.

### Water-dried clean vegetables:

Harvested fresh vegetables are promptly tidied up (by removing inedible parts), washed in water, and promptly packaged in plastic film bags with harmonica-type closure openings. After packaging they are promptly stacked in the water-drying device, and air is discharged in a vacuum. After air discharge, they are removed from the water-drying device, and fresh vegetables are then in vacuum packaging. They are then subjected to industrialized sterilization by irradiation and secondary closure, to produce vacuum packaged water-dried fresh vegetables for market.

The oxygen-free environment of vacuum packaging can inhibit over-ripening and spoiling of fresh vegetables for a certain period of time.

The water-drying storage room of device example 2 can become a device for producing water-dried clean vegetables in or at the edge of fields at the site of vegetable production. By removing inedible parts from vegetables in the vicinity of the production site and returning them to the field, the organic content of the earth can be increased, so as to nurture the fertility of the land. This reduces loss of vegetables due to spoiling on the journey to market, and transportation to no avail, and has an especially marked effect in reducing pollution caused by domestic waste of cities. Furthermore, water-dried clean vegetables, having no need for washing, can alleviate water supply shortages in cities effectively.

The production of water-dried clean vegetables by water-drying processing will bring about a huge reduction in the production costs involved in bringing clean vegetables to market, while guaranteeing the freshness of clean vegetables. It will also assist in the establishment of a system for quality tracing of products and agricultural products.

### Water-dried dehydrated vegetables:

Traditional dehydrated vegetables are a kind of dry vegetable made by subjecting vegetables to artificial heating to remove most of the moisture therefrom.

Water-dried dehydrated vegetables differ from traditional dehydrated vegetables in that process steps such as soup-boiling, oven-drying and sealing are omitted. The packaging step is carried out earlier, and is similar to that for water-dried clean vegetables, with the exception that the time at which the dehydrated vegetables are removed from the water-drying device is later. Moreover, before secondary closure and dispatch to market, the dehydrated vegetables can be repeatedly put into and taken out of the water-drying device for drying operations to be performed, in order to achieve the required moisture content.

Compared to traditional dehydrated vegetables, water-dried dehydrated vegetables return to their original state more readily when immersed in water for consumption, while the loss of chlorophyll and vitamins from the vegetables will also be reduced.

It is not difficult to see that in addition to the difference in packaging, water-dried dehydrated vegetables are intrinsically different from traditional dehydrated vegetables in terms of quality in eating.

### Water-dried vegetables pickled in salt or soy sauce

The procedure for processing water-dried vegetables pickled in salt or soy sauce is similar to that for water-dried dehydrated vegetables or water-dried clean vegetables; it differs in that during packaging in plastic film bags with harmonica-type closure openings, a seasoning stock containing salt or soy sauce is further added to the plastic bags, so the vacuum air discharge process is also a vacuum impregnation process.

Pickling in salt is an extremely effective method of preserving vegetables at an early stage. Nowadays, the pickling of vegetables in salt has changed from a simple means of preservation to a processing technology for uniquely flavoured vegetable products.

The high salt content in traditional vegetables pickled in salt or soy sauce is a major requirement for the preservation of quality during storage thereof. A high level of salt is detrimental to human health, whereas water-dried vegetables picked in salt or soy sauce have vacuum packaging and so can have a lower salt content; vacuum impregnation, vacuum air discharge and drying are integrated in a single process, to simply and conveniently produce a low-salt product of vegetables picked in salt or soy sauce with uniform salt content.

Water-dried vegetables pickled in salt or soy sauce can completely change the unhygienic conditions in which traditional vegetables pickled in soy sauce are pickled, with flies filling the air and maggots filling the vats. This is beneficial for not only the physiological hygiene but also the psychological hygiene of consumers of vegetables pickled in salt or soy sauce.

It is not difficult to see that in addition to the difference in packaging, water-dried vegetables pickled in salt or soy sauce are a world apart from traditional vegetables pickled in salt or soy sauce in terms of quality in eating.

### Water-dried edible fungi:

The procedure for processing water-dried wood ears and mushrooms is similar to that for water-dried dehydrated vegetables or water-dried clean vegetables. The vacuum packaging thereof allows the volume to be compressed by the atmosphere; high-ratio compression of the volume of dry wood ears can save a huge amount of transportation space, improving transportation efficiency.

### Water-dried food example 4: water-dried meat products

### Water-dried deacidified fresh meat:

Deacidification of meats is a process for post-ripening of meats provided by modern meat science and dietetics. When livestock such as cattle, sheep and swine are slaughtered, a physiological reaction in these animals causes lactic acid substances and other bodily fluids to be produced in the muscle tissue thereof. The carcass of muscle of slaughtered livestock is divided into pieces of fresh meat of a certain volume, and promptly packaged in plastic film bags with harmonica-type closure openings; these are then stacked in the water-drying storage room for water-drying processing to be carried out. In such an oxygen-deficient environment, multiplication of microbes can be inhibited, while lactic acid substances in muscle tissue is decomposed under negative pressure and ordinary temperature conditions into carbon dioxide, ethanol and water, which rapidly volatilizes and thus leaves the muscle carcass.

Comparing water-drying processing with deacidification of fresh meat by cooling in the prior art, water-drying inhibits the multiplication of microbes by cutting off oxygen, whereas deacidification by cooling inhibits the multiplication of microbes by means of low temperature. Investment in equipment is significantly reduced by water-drying processing. A low temperature will have an impact on the decomposition of lactic acid, whereas water-drying takes place at ordinary temperature, and so the lactic acid decomposition process is shortened. Deacidification by cooling takes place under ordinary pressure, whereas water-drying takes place under negative pressure, and so products of the decomposition of lactic acid, such as carbon dioxide, ethanol and water, volatilize more quickly.

Compared to deacidification processing by cooling, water-drying processing of fresh meat can lower the equipment investment, reduce the consumption of energy required for cooling, shorten the processing time and reduce the cost of processing while achieving the same results. Furthermore, fresh meat processed by water-drying is formed directly in the vacuum packaging, and so contamination during circulation can be prevented effectively.

The fresh meat is cut up into small pieces which are easily sold, and packaged in plastic film bags with harmonica-type closure openings. Preferably, two or more of the four edges of each plastic film bags are harmonica-type closure openings. After 4 - 10 hours of water-drying processing in the water-drying storage room, the negative pressure in the water-drying storage room is released, and the product can go to market immediately after removal as water-dried fresh meat ready-packed in vacuum bags. During the shelf life of 72 hours, there is no need to rely upon chilled warehouses, chilled vehicles or chilled display cabinets. Moreover, the production cost thereof is not likely to be significantly greater than that of hot fresh meat or frozen meat, while the quality and hygiene thereof will be significantly improved. Water-drying storage rooms provide places which lack cold chain equipment, such as small cities and towns, with an option for improving fresh meat supply conditions.

### Water-dried cured meat:

The procedure for processing water-dried cured meat is essentially the same as that for water-dried vegetables pickled in salt or soy sauce, with the exception that the object of processing and the pickling stock are different.

Water-dried cured meat differs from traditional cured meat in that the drying process thereof is water-drying rather than smoking. The remainder of the process can be the same; differences in the quality of water-dried cured meat are determined by differences in the drying process. Modern science has demonstrated that the process of smoking traditional cured meat is in fact a process of contamination; smoke generated by the substances burned, especially oily plants, contain carcinogenic substances, and the contamination therefrom leads to a reduction in the eating quality of cured meat. A property of the smoking process is that it bakes meat dry, so that the level of dry hardness thereof is quite high, increasing the difficulty of returning the water during pre-consumption processing.

If the step of smoking is replaced with water-drying in the cured meat production process, the drying process can be conducted under negative pressure conditions, while the drying batch size can be increased. Moreover, vacuum packaging can be accomplished simply and conveniently, the phenomenon of dry hardness in cured meat can be reduced effectively, and processing to return water prior to eating can be facilitated. Production of water-dried cured meat in large quantities can regulate the seasonal effect of live pig production.

Traditional cured meat has quite a high salt content; water-dried cured meat can greatly reduce the amount of salt used, to produce low-salt cured meat that is beneficial to human health.

### Water-dried jerky:

Water-dried jerky differs from traditional jerky in that the drying process thereof is water-drying rather than heat-drying. The remainder of the process can be similar. The quality of the finished product is also somewhat different; water-dried beef jerky has a significantly reduced level of dry hardness, and a higher level of sponginess. Traditional beef jerky is typically dried after boiling; baking easily gives rise to dry hardness, while drying in hot oil results in the jerky being spongier but having too high an oil content. With other drying methods, such as drying in the wind or the sun, preservation of quality of the boiled meat cannot be guaranteed, while the cost of freeze-drying is obviously too high. Water-drying, on the other hand, can accomplish slow drying of boiled meat under oxygen-free, low-pressure conditions.

The procedure for processing water-dried jerky is essentially the same as for water-dried cured meat, with the exception that the object of processing and the pickling stock are different. The object of processing is lean meat that has been boiled and then immediately cut into pieces (slices or strips), while the pickling stock is a seasoning stock containing the stock in which the meat was originally boiled.

Another way in which water-dried jerky is different from traditional jerky is that the lean meat heating process is shorter, which prevents the lean meat from tasting like old wood as a result of overheating. The process of slow drying under oxygen-free and low-pressure conditions is also a process in which the seasoning stock containing the stock in which the meat was originally boiled is concentrated, and seasoning of the lean meat is achieved by impregnation and finally dehydration and hardening.

The differences in the way in which water-dried jerky and traditional jerky are processed result in the packaging being different and the eating quality being fundamentally improved.

Water-dried food example 5: water-dried milk powder and crystalline fruit and vegetable powders

### Water-dried milk powder:

Cow milk or the milk of another animal that has just been squeezed is enclosed in bags made from a material that is air-permeable but not water-permeable (such as SYMPATEX waterproof breathable membrane, Tyvek waterproof breathable membrane or TPU waterproof breathable membrane, etc.). The packed amount is half of the maximum capacity or less, this limit being determined by the ability to prevent bursting of the bag closure due to expansion.

The milk enclosed in bags is put into the water-drying device, and the water content is continuously reduced by water-drying processing. Concentrated milk paste or milk powder can be produced by concentration.

### Water-dried crystalline fruit and vegetable powders:

Newly expressed fruit juice or vegetable juice is subjected to water-drying processing in the same way as water-dried milk powder is processed. Concentrated fruit or vegetable juice pastes, or crystalline fruit or vegetable powders, can be produced by concentration.

Based on the explanations of the five examples above, any person skilled in the art should have no difficulty in seeing the following: As a method of processing, water-drying can be used in the harvesting not only of biomass edible material produced on dry land, but also of biomass edible material produced in water such as kelp, agar, fish and shellfish. It can be used to process not only raw food but also cooked food; for instance, the method of processing water-dried jerky can similarly be used for the drying of beancurd, cooked wheaten food, starch noodles or starch vermicelli. Water-drying can be used not only to process edible material, but also for the drying of non-edible agricultural products such as rubber, starch and feed. It can be used for storing not only edible biomass, but also biomass propagation material such as crop seeds.

Summarizing the above examples, it is not difficult to see that water-drying is not only an energy-saving drying processing method, but also an anti-mouse, anti-insect and anti-mould storage method. In combination with plastic bags with harmonica-type closure openings, it can realize the modern processing functions of vacuum impregnation and vacuum packaging. It also allows processing in terms of water washing and water separation to be accomplished with no extra effort in the course of processing, and can even create conditions allowing hydraulic delivery of staple materials such as grain by pipe. As a pioneering invention, it will have vast room for application, and become an effective, simple and convenient post-harvest processing method which can be used widely, improves the safety and quality of food overall, and reduces loss and wastage of food due to spoiling. As equipment for producing and maintaining a crude low vacuum, water-drying equipment will accomplish the low-cost popularization of the use of vacuum technology in the farming, forestry, animal husbandry, sideline production and fishery industries. Reduction of wastage and loss of food gives the same result as increased production. The widespread use of water-drying equipment will become an intangible field of grain in this modern age of increasingly scarce land resources, and contribute towards the safety of grain for humans.

### Industrial practicability

The water equilibrium variable pressure drying method is a completely new in-granary drying method. Unlike the oxygen-containing environment in such drying methods as airing, wind-drying, oven-drying, freeze-drying and vacuum drying by air extraction, it relies upon the airtight environment in water-drying equipment. The essence of the equipment thereof lies in using water to create an oxygen-deficient negative pressure space in which to put a material to be dried and stored; during operation of this oxygen-deficient negative pressure space, the partial pressure of oxygen in the air with which the stored material comes into contact is less than one percent of the partial pressure of oxygen in the atmosphere. The quality of the stored material is preserved under the oxygen-deficient conditions, and slow drying is carried out under the quality-preserving conditions. This is fundamentally different from reducing moisture content by drying to preserve quality as in the prior art. The method of preserving quality first and then drying wins time for energy saving in drying, whereas the preservation of quality after drying is prior art.

The essence of the equipment lies in using water to create an oxygen-deficient negative pressure space, using water to discharge and cut off air, using the weight of water to create negative pressure in order to reduce the evaporation temperature and increase the evaporation rate, and using the equilibrium between the evaporation and liquefaction of steam to conduct thermal energy. The oxygen-deficient negative pressure space is thus both a quality preservation and storage space, and a space in which drying is realized.

From the point of view of equipment types, the specialized device of example 1, the general-use device of example 2, and the simple devices of examples 3 and 4 are not nearly capable of encompassing the range of types. Such an oxygen-deficient negative pressure space, created and maintained using water, can exist permanently in a dam or water tower, on an island or ship, or in a building or structure; it can be combined with equipment pipes of a water conservancy facility by connecting in series, in parallel, or in both series and parallel, and become a permanent or moveable facility or device. From a series of connected silos of more than ten thousand tons, down to kitchen utensils, there is no limit to the number of ways it can be used.

From the point of view of the object of drying, water-drying can be used for storing and drying the vast majority of biomass edible materials. In addition to water-dried products, the products thereof include the by-product distilled water; the fact that some of this distilled water comes from organisms sets it apart from water distilled from pure mineral water. Water-dried foods and foods dried using existing technology are also different in terms of quality.

Water-drying technology itself is a pioneering inventive technology. Although it is not yet perfect, there is even more room for developing its applications and it provides an economical solution for the application of food safety guarantees on a broad scale. Requirements on the drying medium are not at all strict; rainwater, well-water and river-water can all serve as water for drying. Even seawater can be used as water for drying kelp, sea fish and shellfish, while water distilled therefrom can be used as a source of freshwater on ships.

In terms of economic benefits, the use of a water pump instead of a vacuum pump to create and maintain the crude low vacuum pressure demanded by water-drying technology creates room for reducing equipment investment and running expenses involved in the extended application of the technology of freshness preservation by vacuum and drying.

From the point of view of the use of agricultural machinery, the number of types of equipment used to process products of farming, forestry, animal husbandry and fishery after harvesting is increased, and economical equipment fit for use is provided for the storage, drying and even value-added processing, transportation and packaging of agricultural products after harvest.

From the point of view of food transportation, water-drying equipment also provides a means of using the low-cost transportation method of hydraulic pipe delivery in the allocation and transportation of grain staple products from the site of production to the point of sale.

Although the water-drying method may cause watersoluble materials in foods to be carried away in water and lost, it is not difficult to avoid this shortcoming as far as possible during actual production and overcome it using existing technology. For instance, the present invention provides the solution of using material that is air-permeable but not water-permeable to package water-dried milk and fruit.

Water-drying equipment can improve grain storage conditions, and reducing loss after harvesting is equivalent to increasing the "intangible grain field". This is of huge significance in solving the problem of grain safety.

It must be stated that the above are the technical principles of the embodiments of the present invention, and the technical principles used in the embodiments. If any change or modification is made to the water-drying method or equipment in accordance with the idea of the present invention, any function or effect arising from such a change or modification that does not exceed the scope of function mentioned in the Description or accompanying drawings should fall within the scope of the present invention.

## Claims

1. Food, obtained by processing a biomass edible material (object of processing) after harvesting, wherein the process of post-harvest processing is referred to as a water equilibrium variable pressure drying process, and the food obtained is referred to as water equilibrium variable pressure dried food (abbreviated as water-dried food), **characterized in that** the process of post-harvesting processing comprises the following steps:
(1) loading: a storage space of a water equilibrium variable pressure drying process device (abbreviated as water-drying device) is filled with a bulk or packaged biomass edible material (object of processing) and water serving as a processing medium;
(2) hermetic sealing: the storage space of the water equilibrium variable pressure drying process device is isolated from the atmosphere;
(3) discharging of water: water is discharged until only the bulk or packaged biomass edible material and steam remain in the storage space of the water equilibrium variable pressure drying process device and negative pressure is formed;
(4) maintaining: negative pressure is maintained for a certain period of time, so that the moisture content of the biomass edible material in the storage space of the water equilibrium variable pressure drying process device falls to the required level under negative pressure conditions;
(5) unloading: hermetic sealing is removed, so that the storage space of the water equilibrium variable pressure drying process device recovers ordinary pressure;
(6) discharge of material: when storage is complete, bulk or packaged water-dried food that has undergone water equilibrium variable pressure drying processing is removed from the water equilibrium variable pressure drying process device.

2. Food according to Claim 1, **characterized in that** the packaged biomass edible material is in packaging with a harmonica-type closure opening.

3. Water equilibrium variable pressure drying according to Claim 1, being a processing method (abbreviated as water-drying) for post-harvest processing of biomass edible material, **characterized in that** it is carried out in an airtight space capable of being isolated from the atmosphere, the air in the space being discharged using water and excluded, and gravity being used to collect liquid water and discharge the same from the airtight space so that the storage space containing the object of processing forms or maintains a vacuum (negative pressure) environment, including the steps of loading, hermetic sealing, discharge of water, maintaining, unloading and discharge of material.

4. Water equilibrium variable pressure drying method according to Claim 3, **characterized in that** the vacuum (negative pressure) formed or maintained in the storage space has a pressure value between 2000 P and 9999 P, depending on temperature variation in the storage space.

5. Water equilibrium variable pressure drying method according to Claim 3, **characterized in that** the partial pressure of oxygen in the airtight storage space after discharge of water is less than one percent of the partial pressure of oxygen in the atmosphere.

6. Water equilibrium variable pressure drying method according to Claim 3, comprising the steps of loading, hermetic sealing, discharge of water, maintaining, unloading and discharge of material, **characterized in that** once the moisture within the object of processing has fallen to the required level by evaporation under negative pressure conditions, at the time of unloading, a gas which causes no oxidation is charged into the storage space, so that the storage space is at the same or approximately the same pressure as the atmosphere, and negative pressure is unloaded until the material is discharged.

7. Water equilibrium variable pressure drying method according to Claim 3, **characterized in that** at the time of loading, the object of processing in bulk form and water are conveyed in a mixed state to the storage space of the water-drying device by hydraulic pipe delivery.

8. Water equilibrium variable pressure drying method according to Claim 3, **characterized in that** it is used for the vacuum impregnation or vacuum packaging of biomass edible material.

9. Water equilibrium variable pressure drying process device according to Claim 1, comprising spaces (A, B or C) enclosed by a wall material (1) capable of obstructing the passage of fluid material, a hermetically sealable inlet/outlet (2), and a water discharge port (4), **characterized in that** it also comprises a permanently connected or temporarily connected device, which is connected or in communication with the inlet/outlet (2) or water discharge port (4), and is capable of accomplishing water filling and water discharging to vary the pressure in space (A) and maintain negative pressure therein.

10. Water equilibrium variable pressure drying process device according to Claim 9, wherein the space can be divided into two parts, one part being a storage space (A) for storing the object of processing, and the other part being a space (B or C) for accommodating liquid water, **characterized in that** a device (3) capable of obstructing the movement of solid material but not obstructing the movement of fluid is provided between and separates the two spaces.

11. Water equilibrium variable pressure drying process device according to Claim 9, **characterized in that** the wall material (1) is metal with heat-conducting properties.

12. Water equilibrium variable pressure drying process device according to Claim 9, **characterized in that** the permanently connected or temporarily connected device capable of accomplishing water filling and water discharging to vary the pressure in space (A) and maintain negative pressure therein has a composition containing: a water pump provided inside the water discharge port and capable of forcibly discharging water;
or a water pump connected externally to the water discharge port and capable of forcibly discharging water;
or a water delivery pipe for water filling and water discharging, connected to the water discharge port and having a height equal to or greater than 10.34 metres;
or a vacuum pump connected to or in communication with the inlet/outlet (2) or water discharge port (4).

13. Water equilibrium variable pressure drying process device according to Claim 9, **characterized in that** the inlet/outlet (2) is hermetically sealed by a flexible material supported by the object of processing (open-topped water-drying granary).

14. Water equilibrium variable pressure drying process device according to Claim 10, **characterized in that** the device that is provided between spaces and is capable of obstructing the movement of solid material but not obstructing the movement of fluid comprises a one-way valve or cut-off valve provided on a channel (a or b or c) for controlling the flow direction of fluid.

15. Water equilibrium variable pressure drying process device according to Claim 9 or 10, **characterized in that** a plurality of mutually independent storage spaces (A) storing objects of processing are connected in series, or in parallel, or first in series and then in parallel.

16. Water equilibrium variable pressure drying process device according to Claim 9 or 12, **characterized in that** an S-shaped curved pipe is provided on the device capable of accomplishing water filling and water discharging to vary the pressure in space (A) and maintain negative pressure therein.

17. Water equilibrium variable pressure drying process device according to Claim 9, **characterized in that** a hydraulic pipe delivery and loading device is connected to the hermetically sealable inlet/outlet (2).

18. Water equilibrium variable pressure drying process device according to Claim 17, **characterized in that** the device capable of accomplishing water filling and water discharging to vary the pressure in space (A) and maintain negative pressure therein, and the hydraulic pipe delivery and loading device, are provided with a shared pipe.

19. Water-drying device according to Claim 9, 17 or 18, **characterized in that** it is used for hydraulic delivery of grain by pipe.

20. Package in which biomass edible material is packaged, for the water equilibrium variable pressure drying according to Claim 1, **characterized in that** a harmonica-type closure opening is used as the sealing structure on at least one side or edge of the package, the harmonica-type closure opening consisting of closed regions distributed at intervals on a press-closure band, and one-way channels that are left between the closed regions distributed at intervals and allow fluid within the package to flow to the outside of the package.

21. Package for water equilibrium variable pressure drying according to Claim 20, **characterized in that** the width a of the one-way channels is no more than 100 times the thickness of the plastic film of the package, and the press-closure band width of the harmonica-type closure opening, i.e. the length b of the one-way channels, is not less than 3 times a.

22. Package for water equilibrium variable pressure drying according to Claim 20, **characterized in that** a plurality of packages form a series of connected packages that are easily separated.

23. Package for water equilibrium variable pressure drying according to Claim 22, **characterized in that** there are through-holes on the press-closure band, the through-holes being capable of connecting with the harmonica-type closure opening to realize the function of fluid discharge.

24. Package for water equilibrium variable pressure drying according to Claim 22, **characterized in that** a separating track in the form of holes, which tears easily to separate individual bags and consists of through-holes, is distributed on the press-closure band.

25. Package for water equilibrium variable pressure drying according to Claim 20, **characterized in that** the closed regions distributed at intervals on the press-closure band of the harmonica-type closure opening, and the one-way channels left between the closed regions distributed at intervals, form a barcode.
